# EUROPEAN PATENT APPLICATION

(11) **EP 4 769 842 A1**
(43) Date of publication of application: **01.07.2026**
(21) Application number: 24866851.9
(22) Date of filing: 30.04.2024
(51) Int. Cl.: H01R 13/00

(54) **PHOTOVOLTAIC INVERTER**

(30) Priority: 22.09.2023 CN 202322594917 U; 22.09.2023 CN 202322610589 U
(71) Applicant: Huawei Digital Power Technologies Co., Ltd., Shenzhen, Guangdong 518043 (CN)
(72) Inventor: WANG, Shiguang, Shenzhen, Guangdong 518043 (CN); YU, Huiyong, Shenzhen, Guangdong 518043 (CN); CHEN, Chao, Shenzhen, Guangdong 518043 (CN); HAN, Xiaoliang, Shenzhen, Guangdong 518043 (CN); WANG, Keying, Shenzhen, Guangdong 518043 (CN); XIA, Quanfei, Shenzhen, Guangdong 518043 (CN)
(74) Representative: Gill Jennings & Every LLP
(86) International application number: PCT/CN2024/090749
(87) International publication number: WO 2025/060427

(57) **Abstract**

This application provides a photovoltaic inverter, including a casing, a main circuit board, a positive connector, a negative connector, an upper plate bracket, and a busbar conductor. One end of the positive connector is connected between the upper plate bracket and the main circuit board, and one end of the negative connector is electrically connected to the main circuit board through the busbar conductor. The positive connector or the negative connector includes an insulation base and a metal insertion member. One end of the insulation base is located inside the casing, and the other end is located outside the casing. The positive connector or the negative connector is fastened to the casing through the insulation base. The insulation base is of a hollow tubular structure, the metal insertion member is wrapped in the insulation base, and the metal insertion member includes an interface portion, a fastening portion, and a contact portion. The interface portion is configured to connect to a photovoltaic module, the contact portion is of a flat structure, the contact portion is configured to connect to the main circuit board or the busbar conductor in a stacking manner, and the fastening portion is configured to mechanically fasten the insulation base. An electrical connection between a connector and a circuit board is implemented through an upper plate bracket, so that a mounting procedure can be simplified, and connection reliability can be improved.

## Description

This application claims priority to Chinese Patent Application No. 202322594917.6, filed with the China National Intellectual Property Administration on September 22, 2023 and entitled "PHOTOVOLTAIC INVERTER", which is incorporated herein by reference in its entirety.

This application claims priority to Chinese Patent Application No. 202322610589.4, filed with the China National Intellectual Property Administration on September 22, 2023 and entitled "PHOTOVOLTAIC INVERTER", which is incorporated herein by reference in its entirety.

### TECHNICAL FIELD

This application relates to the field of photovoltaic technologies, and specifically, to a photovoltaic inverter.

### BACKGROUND

In a photovoltaic power generation system, electric energy of a photovoltaic module needs to be transmitted to a photovoltaic inverter, to implement inversion of a current, so that the electric energy finally enters a load or is connected to a power grid. A male connector may be mounted at a photovoltaic module end, and a female connector may be mounted at a photovoltaic inverter end. After the male connector is connected to the female connector, the photovoltaic module may be electrically connected to the photovoltaic inverter. During actual application, at the photovoltaic inverter end, a conductive core of the connector is electrically connected to a circuit board inside the photovoltaic inverter through a cable. Because the cable needs to be electrically connected to both the conductive core and the circuit board, mounting steps are complex, and a problem of connection reliability is likely to occur.

In the photovoltaic power generation system, the photovoltaic inverter may convert an input direct current into an alternating current. The photovoltaic inverter includes a photovoltaic connector, and one end of a metal insertion member of the photovoltaic connector needs to be connected to a circuit board. When the photovoltaic connector is mounted, the metal insertion member is prone to interference with an upper plate bracket or the circuit board. As a result, assembly difficulty is increased and poor contact may be caused. In addition, because a cable is often inserted and withdrawn during use, the metal insertion member is prone to damage.

### SUMMARY

This application provides a photovoltaic inverter, to implement an electrical connection between a photovoltaic connector and a circuit board through an upper plate bracket without a cable, so that a mounting procedure can be simplified, and connection reliability can be improved.

This application provides a photovoltaic inverter. A photovoltaic connector of the photovoltaic inverter has an anti-rotation structure, to prevent a metal insertion member of the photovoltaic connector from rotating. This helps reduce mounting difficulty of the photovoltaic connector, thereby improving assembly efficiency of the photovoltaic inverter and helping prevent the photovoltaic connector from being damaged due to torsion.

According to a first aspect, a photovoltaic inverter is provided. The photovoltaic inverter includes a casing, a main circuit board, a positive connector, a negative connector, an upper plate bracket, and a busbar conductor. The casing includes a bottom housing and a cover plate, the bottom housing and the cover plate enclose an accommodation cavity, the bottom housing includes a bottom plate disposed opposite to the cover plate, and a heat sink is mounted on a side that is of the bottom plate and that is away from the cover plate. The main circuit board is located in the accommodation cavity, and the upper plate bracket is located between the bottom plate and the main circuit board and is fastened to the bottom plate. One end of the positive connector is connected between the upper plate bracket and the main circuit board, one end of the negative connector is electrically connected to the main circuit board through the busbar conductor, and the busbar conductor is configured to: uniformly combine currents input by a plurality of negative electrodes and then transmit a combined current to the main circuit board. The busbar conductor includes a busbar metal sheet and an adapter metal sheet, the busbar metal sheet is electrically connected to a plurality of negative connectors, and the busbar metal sheet is configured to uniformly combine currents transmitted by the plurality of negative connectors. The adapter metal sheet extends in a first direction, a first end of the adapter metal sheet is fastened to the busbar metal sheet, a second end of the adapter metal sheet is fastened to the main circuit board, the adapter metal sheet is configured to transmit, to the main circuit board, a negative current obtained through combination by the busbar metal sheet, and the first direction is perpendicular to a plane on which the main circuit board is located.

In the photovoltaic inverter provided in this embodiment of this application, the positive connector and the negative connector may be electrically connected to the main circuit board through the upper plate bracket without a cable, so that a mounting procedure can be simplified, and connection reliability can be improved. Specifically, the positive connector is connected between the upper plate bracket and the main circuit board, the negative connector is electrically connected to the main circuit board through the busbar conductor, and the busbar conductor may directly combine currents in a plurality of loops and then transfer a combined current to the main circuit board. The busbar conductor may include the busbar metal sheet and the adapter metal sheet. The busbar metal sheet combines the currents transmitted by the plurality of negative connectors and then transmits a combined current to the adapter metal sheet, and then the adapter metal sheet transmits the combined current to the main circuit board, to transmit the currents from the negative connectors to the main circuit board. In this way, a quantity of separate upper plate conductors can be reduced, a loop length can be shortened, a contact thermal resistance and heat generation can be reduced, adapter efficiency can be improved, and costs of an entire system can be reduced.

With reference to the first aspect, in some implementations of the first aspect, the upper plate bracket includes a first-type support column, a second-type support column, and a base, the first-type support column and the second-type support column are alternately arranged in sequence in a second direction, the second direction is perpendicular to the first direction, and the base is fastened to the bottom plate; a first end of the first-type support column is fastened to the base, a second end of the first-type support column is connected to the main circuit board, and the second end of the first-type support column is an end away from the base; the one end of the positive connector is connected between the second end of the first-type support column and the main circuit board; a first end of the second-type support column is fastened to the base, a second end of the second-type support column is connected to the one end of the negative connector, the second end of the second-type support column is an end away from the base, a height of the second-type support column in the first direction is less than a height of the first-type support column in the first direction, and a height difference between the second-type support column and the first-type support column in the first direction is greater than a first threshold; and the busbar metal sheet includes a plurality of busbar ends and an adapter end, the plurality of busbar ends are respectively electrically connected to the plurality of negative connectors, and the adapter end is fastened to the adapter metal sheet.

It should be understood that the height of the second-type support column in the first direction is less than the height of the first-type support column in the first direction, the height difference between the second-type support column and the first-type support column in the first direction is greater than the first threshold, and the first direction is perpendicular to the plane on which the main circuit board is located, so that an insulation distance between the first-type support column and the second-type support column meets a specific requirement, and problems such as discharging and a short circuit are avoided.

In the photovoltaic inverter provided in this embodiment of this application, the positive connector is connected between the first-type support column and the main circuit board, that is, may be electrically connected to the main circuit board directly through the first-type support column. The negative connector is electrically connected to the main circuit board through the second-type support column and the busbar conductor, and the busbar conductor may directly combine currents in a plurality of loops and then transfer a combined current to the main circuit board. In this way, a quantity of separate upper plate conductors can be reduced, a loop length can be shortened, a contact thermal resistance and heat generation can be reduced, adapter efficiency can be improved, and costs of the entire system can be reduced.

In addition, the first-type support column and the first-type support column are designed a manner of staggering upper space and lower space. For example, the positive connector at a positive electrode is connected to the first-type support column, and the negative connector at a negative electrode is connected to the second-type support column. The spatial staggered design can reduce an overall volume of the upper plate bracket, and lay a foundation for miniaturization of the entire system.

In a possible implementation, the first-type support column includes a plurality of first support portions, and the second-type support column includes a plurality of second support portions. The plurality of first support portions and the plurality of second support portions are alternately arranged in sequence in the second direction. In the first direction, a distance between a surface that is of the first support portion and that is away from the bottom plate and the bottom plate is greater than a distance between a surface that is of the second support portion and that is away from the bottom plate and the bottom plate. Ends of a part of connectors (namely, a plurality of positive connectors) of a plurality of photovoltaic connectors are respectively fastened to surfaces that are of the plurality of first support portions and that are away from the bottom plate, and ends of the other part of connectors (namely, the plurality of negative connectors) of the plurality of photovoltaic connectors are respectively fastened to surfaces that are of the plurality of second support portions and that are away from the bottom plate.

With reference to the first aspect, in some implementations of the first aspect, the bottom housing further includes a first side plate located between the bottom plate and the cover plate, the first side plate is perpendicular to the bottom plate and the cover plate, both the positive connector and the negative connector are fastened to the first side plate, a distance between the positive connector and the bottom plate is greater than a distance between the negative connector and the bottom plate in the first direction, the positive connector and the negative connector are alternately arranged in sequence in the second direction, and the second direction is parallel to a plane on which the first side plate is located.

With reference to the first aspect, in some implementations of the first aspect, the positive connector includes a first housing and a first terminal, the first housing is fastened to an outer side of the first side plate, and the first terminal is located in the first housing, extends into the casing, and is connected to the second end of the first-type support column; and the negative connector includes a second housing and a second terminal, the second housing is fastened to the outer side of the first side plate, and the second terminal is located in the second housing, extends into the casing, and is connected to the second end of the second-type support column.

In the photovoltaic inverter provided in this embodiment of this application, the plurality of positive connectors are fastened to the first-type support column, and the plurality of negative connectors are fastened to the second-type support column, so that the plurality of positive connectors and the plurality of negative connectors are alternately arranged in sequence in the second direction, and are distributed in a staggered manner in the first direction. This reduces mutual interference between electrical connections between the plurality of positive connectors and the plurality of negative connectors, improves stability of the electrical connections, and makes an overall part more regular.

In a possible implementation, there may be a plurality of included busbar conductor, and the busbar conductor is configured to transfer, to the main circuit board, a current transmitted by the negative connector. One of the plurality of busbar conductors may be connected to second ends of at least two support columns in the second-type support column, that is, a plurality of currents are transmitted to the main circuit board after the busbar conductor is designed for combination. One of the plurality of busbar conductors may alternatively be separately connected to a second end of one second-type support column, that is, the busbar conductor is not designed for combination and one current is separately transmitted to the main circuit board.

In a possible implementation, the busbar metal sheet includes a plurality of busbar ends and an adapter end, the plurality of busbar ends are respectively electrically connected to the plurality of negative connectors, the plurality of busbar ends are separately connected to the second end of the second-type support column, and the adapter end is connected to the adapter metal sheet.

In this implementation, the busbar metal sheet may include the plurality of busbar ends and the adapter end, and the plurality of busbar ends may be respectively electrically connected to the plurality of negative connectors. That is, the plurality of busbar ends may be respectively connected to second end surfaces of a plurality of second-type support columns, and the plurality of negative connectors are respectively connected to the second end surfaces of the plurality of second-type support columns. Therefore, the plurality of busbar ends may be respectively electrically connected to the plurality of negative connectors. After the plurality of busbar ends of the busbar metal sheet are respectively electrically connected to the plurality of negative connectors, currents are combined. After the currents are combined into one current, the current is transferred to the adapter metal sheet through the adapter end. The adapter metal sheet transmits the combined current to the main circuit board. In this way, a quantity of separate upper plate conductors can be reduced, a loop length can be shortened, a contact thermal resistance and heat generation can be reduced, and adapter efficiency can be improved.

With reference to the first aspect, in some implementations of the first aspect, the photovoltaic inverter further includes an integrated circuit board and an electrical component, the integrated circuit board is fastened to the base and connected to the plurality of negative connectors, the integrated circuit board is located between the busbar metal sheet and the main circuit board in the first direction, the integrated circuit board is located, in a third direction, on a side that is of the first-type support column and that is away from the first side plate, and the third direction is perpendicular to the first direction and the second direction; and the electrical component is configured to implement at least one of direct current filtering, surge protection, temperature detection, and current detection functions, and the electrical component is fastened to a surface that is of the integrated circuit board and that faces the main circuit board.

It should be understood that functions such as direct current filtering, surge protection, temperature detection, and current detection may be integrated into the integrated circuit board based on a size, integration, and the like of the integrated circuit board. Usually, at least one of direct current filtering, surge protection, temperature detection, and current detection functions may be integrated into the integrated circuit board, so that a size of the main circuit board can be reduced. This reduces a size of the entire system and reduces costs.

In a possible implementation, the integrated circuit board includes a circuit board body and a connection sheet. One end of the connection sheet is electrically connected to the circuit board body, and the other end of the connection sheet is connected to the second end of the second-type support column and is electrically connected to the negative connector. The connection sheet is made of a conductive metal material.

It should be noted that, the integrated circuit board may be electrically connected to the negative connector through the connection sheet, so that a current can be transmitted to the integrated circuit board. In addition, the connection sheet may further be in contact with the busbar conductor, and the busbar conductor may be in contact with the main circuit board, to form a loop between the integrated circuit board and the main circuit board. The current may be transferred to the integrated circuit board in the formed loop. In this way, direct current filtering, temperature detection, current detection, and the like can be performed on the integrated circuit board.

With reference to the first aspect, in some implementations of the first aspect, the upper plate bracket further includes a snap-fit, the snap-fit is fastened to a surface that is of the base and that faces the main circuit board, and the snap-fit is clamped on two sides of the integrated circuit board in the second direction, to clamp the integrated circuit board and the busbar metal sheet together.

In this implementation, the busbar conductor and the integrated circuit board are fastened in a target region in a fastening manner of the snap-fit, to avoid movement of the busbar conductor and the integrated circuit board.

With reference to the first aspect, in some implementations of the first aspect, the photovoltaic inverter further includes a metal connection sheet, one end of the metal connection sheet is connected to the second end of the second-type support column, the other end of the metal connection sheet is connected to the main circuit board, and the metal connection sheet is configured to transmit, to the main circuit board, a current input by one negative connector. The metal connection sheet includes an extension portion, a connection portion, and a fastening portion. The connection portion is connected between the extension portion and the fastening portion, the extension portion is parallel to the fastening portion, the extension portion extends in the third direction, and the third direction is perpendicular to the first direction and the second direction. The upper plate bracket further includes the snap-fit. The snap-fit is fastened to the surface that is of the base and that faces the main circuit board. The snap-fit is clamped on two sides of the extension portion in the second direction, to clamp the metal connection sheet on the base.

In this implementation, the metal connection sheet is fastened in a target region of the base in a fastening manner of the snap-fit, to avoid movement of the metal connection sheet.

With reference to the first aspect, in some implementations of the first aspect, the upper plate bracket further includes a lapping member, the lapping member is fastened to a first-type support column or a base, a second end of the lapping member is connected to the main circuit board, the second end of the lapping member is an end away from the base, and a height difference between the second end of the lapping member and a second end of the first-type support column in the first direction is less than a second threshold; and the second end of the adapter metal sheet is connected between the main circuit board and the second end of the lapping member.

It should be understood that the height difference between the second end of the lapping member and the second end of the first-type support column in the first direction is less than the second threshold, so that the lapping member can support the busbar conductor.

In a possible implementation, in the first direction, the lapping member is located between the integrated circuit board and the main circuit board. A projection of the lapping member in the first direction partially overlaps a projection of the integrated circuit board in the first direction. In a third direction, a distance between the lapping member and the first side plate is greater than a distance between the first-type support column and the first side plate. The lapping member is fastened to the first-type support column.

In a possible implementation, a first end of the lapping member is fastened to the base, the second end of the lapping member is connected to the main circuit board, and one end of the busbar conductor may be connected between the main circuit board and the second end of the lapping member, that is, the busbar conductor is clamped between the lapping member and the main circuit board.

In another possible implementation, the lapping member is suspended, a side surface of the lapping member is fastened to a side surface of the first-type support column, the second end of the lapping member is connected to the main circuit board, and one end of the busbar conductor may be connected between the main circuit board and the second end of the lapping member.

It should be understood that, the main circuit board has a through hole, a through hole is also provided at one end that is of the busbar conductor and that is connected to the main circuit board, a projection of the through hole on the main circuit board overlaps a projection of the through hole on the busbar conductor in the first direction, and a screw may pass through the through hole on the main circuit board and the through hole on the busbar conductor, and be screwed on the second end of the lapping member. That is, the screw may pass through the through hole on the main circuit board and the through hole on the busbar conductor, and is fastened to the lapping member.

With reference to the first aspect, in some implementations of the first aspect, the main circuit board includes a circuit board front surface and a circuit board rear surface that are disposed back to each other in a first direction, the circuit board front surface faces the cover plate, the circuit board rear surface faces the bottom plate, the main circuit board divides the accommodation cavity into a first accommodating cavity and a second accommodating cavity, the first accommodating cavity is located between the main circuit board front surface and the cover plate, the second accommodating cavity is located between the circuit board rear surface and the bottom plate, and a volume of the first accommodating cavity is less than a volume of the second accommodating cavity, to respectively accommodate a first device and a second device; and an operating heat generation amount of the second device is greater than an operating heat generation amount of the first device, or a length of the second device in the first direction is greater than a length of the first device in the first direction; and the first device includes a surface mount device resistor, a surface mount device capacitor, and an indicator that are fastened to the circuit board front surface, and the second device includes an inverter power assembly, a bus capacitor, and an inductor that are fastened to the circuit board rear surface.

It should be understood that, placing the main circuit board, the upper plate bracket, and an electronic device in the accommodation cavity can protect the main circuit board, the upper plate bracket, and the electronic device, and can also effectively utilize cavity space, to avoid an excessively large cavity, improve space utilization, and reduce costs. In addition, the second device may be thermally connected to a heat dissipation fin through the bottom plate. This helps shorten a heat transfer path and improve heat dissipation effect.

It may be understood that a height of an electronic device (namely, the second device) accommodated in the second accommodating cavity is greater than a height of an electronic device (namely, the first device) accommodated in the first accommodating cavity. For example, the height of the second device is less than or equal to 9 cm, and the height of the first device is less than or equal to 5 mm. To be specific, the first accommodating cavity can accommodate an electronic device with a large height, a large volume, and a high heat dissipation requirement, for example, an inverter power assembly, a bus capacitor, or an inductor; and the second accommodating cavity can accommodate an electronic device with a small height, a small volume, and a low heat dissipation requirement, for example, a surface mount device capacitor, a surface mount device resistor, or an indicator.

With reference to the first aspect, in some implementations of the first aspect, the other end of the positive connector is connected to a positive electrode of the photovoltaic module, and the other end of the negative connector is connected to a negative electrode of the photovoltaic module.

With reference to the first aspect, in some implementations of the first aspect, the other end of the positive connector is connected to a positive electrode of an external energy storage apparatus, and the other end of the negative connector is connected to a negative electrode of the external energy storage apparatus.

With reference to the first aspect, in some implementations of the first aspect, the other end of a part of the plurality of positive connectors is connected to the positive electrode of the photovoltaic module, the other end of a part of the plurality of negative connectors is connected to the negative electrode of the photovoltaic module, the other end of the other part of the plurality of positive connectors is connected to the positive electrode of the external energy storage apparatus, and the other end of the other part of the plurality of negative connectors is connected to the negative electrode of the external energy storage apparatus.

With reference to the first aspect, in some implementations of the first aspect, a fastening mounting hole is provided on the base, and the base is fastened to the casing through the fastening mounting hole.

In this implementation, the upper plate bracket may be fastened to the casing through the fastening mounting hole on the base, to avoid a direct connection to the main circuit board. This can reduce strength and stress risks of the main circuit board, and improve connection stability of the upper plate bracket.

With reference to the first aspect, in some implementations of the first aspect, the first-type support column, the second-type support column, and the lapping member may all be of a hollow structure.

In this implementation, the first-type support column, the second-type support column, and the lapping member are of a hollow structure, that is, the upper plate bracket adopts a hollow design, so that a weight of the upper plate bracket can be reduced, and costs can be reduced.

With reference to the first aspect, in some implementations of the first aspect, the first-type support column, the second-type support column, the base, and the lapping member are of an integrated structure.

In a possible implementation, the first-type support column, the second-type support column, and the base are of an integrated structure.

With reference to the first aspect, in some implementations of the first aspect, the first-type support column, the second-type support column, the base, and the lapping member may all be made of an insulation material, to prevent electric conduction.

According to a second aspect, a photovoltaic inverter is provided, including: a photovoltaic connector and a housing configured to accommodate a circuit board, where a through hole is formed on the housing; the photovoltaic connector includes an insulation base and a metal insertion member, one end of the insulation base is located inside the housing, the other end of the insulation base is located outside the housing, and the photovoltaic connector is fastened to the housing through the insulation base; the insulation base is of a hollow tubular structure, the metal insertion member is wrapped in the insulation base, the metal insertion member includes an interface portion, a fastening portion, and a contact portion, the interface portion is configured to connect to a photovoltaic module, the contact portion is configured to connect to the circuit board, the fastening portion is located between the interface portion and the contact portion, the fastening portion is a cylindrical conductor, the fastening portion is in the insulation base, and the fastening portion is configured to fasten the metal insertion member and the insulation base; and a limiting structure is formed on an inner wall of the insulation base, a limiting protrusion is formed on a circumferential surface of the fastening portion, and the limiting structure is configured to clamp the limiting protrusion in a circumferential direction of the fastening portion.

In this embodiment of this application, the limiting structure is formed on the inner wall of the insulation base. Correspondingly, the limiting protrusion is formed on the fastening portion of the metal insertion member, and the limiting structure and the limiting protrusion are clamped together in the circumferential direction of the fastening portion, to prevent the metal insertion member from rotating relative to the insulation base. The metal insertion member may be fastened at an appropriate angle, so that the metal insertion member can be conveniently connected to the circuit board, to reduce assembly difficulty of the photovoltaic connector. In addition, a part that connects the metal insertion member and the circuit board may be tightly attached to the circuit board, to avoid poor contact. Further, the metal insertion member cannot rotate relative to the insulation base. This helps prevent the metal insertion member from being damaged due to torsion caused by a plurality of times of cable insertion and withdrawing.

With reference to the second aspect, in a possible implementation, the limiting structure is plate-shaped, the limiting structure is parallel to an axis of the fastening portion, at least one end of the limiting structure is fastened to the inner wall of the insulation base, and a distance between the limiting structure and the axis is greater than or equal to a radius of the fastening portion; and the limiting protrusion includes a first protrusion portion and a second protrusion portion, the first protrusion portion and the second protrusion portion are separately in contact with the limiting structure, and contacts between the first protrusion portion and the limiting structure and the second protrusion portion and the limiting structure are located on two sides of a projection of the axis onto the limiting structure.

With reference to the second aspect, in a possible implementation, a height of the first protrusion portion and a height of the second protrusion portion are greater than a shortest distance between the limiting structure and the circumferential surface of the fastening portion.

With reference to the second aspect, in a possible implementation, the limiting structure is a groove formed on the inner wall of the insulation base, and the limiting protrusion is inserted into the groove.

With reference to the second aspect, in a possible implementation, the limiting structure is a first support column formed on the inner wall of the insulation base, one end of the first support column is fastened to the inner wall of the insulation base, the other end of the first support column extends toward the metal insertion member, the limiting protrusion includes a first protrusion portion and a second protrusion portion, the first protrusion portion and the second protrusion portion are in contact with the first support column, and at least a part of the first support column is located between the first protrusion portion and the second protrusion portion.

With reference to the second aspect, in a possible implementation, a second support column is formed on the inner wall of the insulation base, the second support column and the limiting structure are disposed opposite to each other, one end of the second support column is fastened to the inner wall of the insulation base, the other end of the second support column extends toward the metal insertion member, and the other end of the second support column abuts against the circumferential surface of the fastening portion.

With reference to the second aspect, in a possible implementation, an inner diameter of at least a part of the insulation base is equal to a diameter of the fastening portion.

In this embodiment of this application, the metal insertion member cannot move toward a direction away from the limiting structure, to avoid a change in a position relationship between the limiting protrusion and the limiting structure.

With reference to the second aspect, in a possible implementation, a positive metal insertion member includes an elastic fastening ring, the elastic fastening ring is located on a side of the part that is of the insulation base and on which the diameter of the insulation base is equal to the diameter of the fastening portion, one end that is of the elastic fastening ring and that is away from the part that is of the insulation base and on which the diameter of the insulation base is equal to the diameter of the fastening portion is fastened to the circumferential surface of the fastening portion, and one end that is of the elastic fastening ring and that is close to the part that is of the insulation base and on which the diameter of the insulation base is equal to the diameter of the fastening portion is tilted; and a third protrusion portion is formed on the circumferential surface of the fastening portion, and the third protrusion portion is located on the other side of the part that is of the insulation base and on which the diameter of the insulation base is equal to the diameter of the fastening portion.

In this embodiment of this application, the elastic fastening ring and the third protrusion portion are clamped, in an axial direction of the fastening portion, with the part that is of the insulation base and on which the diameter of the insulation base is equal to the diameter of the fastening portion, to limit movement of the metal insertion member in the axial direction of the fastening portion, and avoid a change in a position relationship between the limiting protrusion and the limiting structure.

With reference to the second aspect, in a possible implementation, the contact portion of the metal insertion member is of a sheet structure, the contact portion includes a first part, a second part, and a third part, the first part is connected to the circuit board, the third part is connected to the fastening portion, the second part is located between the first part and the third part, and the second part extends toward the circuit board, so that the third part is attached to the circuit board.

In this embodiment of this application, the contact portion of the metal insertion member is bendable, so that the first part of the contact portion is attached to the circuit board, to facilitate a connection between the first part of the contact portion and the circuit board.

With reference to the second aspect, in a possible implementation, the first part of the contact portion is parallel to the circuit board.

In this embodiment of this application, the contact portion is of a sheet structure. Based on the structure of the photovoltaic connector, the metal insertion member cannot rotate inside the insulation base, and the first part of the contact portion is parallel to the circuit board, so that the first part of the contact portion may be tightly attached to the circuit board, to avoid poor contact.

With reference to the second aspect, in a possible implementation, a part that is of the contact portion and that is in the insulation base includes at least one protrusion structure, at least one groove is provided on the inner wall of the insulation base, and the at least one protrusion structure is inserted into the at least one groove.

In this embodiment of this application, the protrusion structure on the contact portion cooperates with the groove on the inner wall of the insulation base, to further limit rotation of the metal insertion member relative to the insulation base. This helps reduce mounting difficulty of the photovoltaic connector, thereby improving assembly efficiency of the photovoltaic inverter and helping prevent the photovoltaic connector from being damaged due to torsion.

According to a third aspect, this application provides a photovoltaic inverter. The photovoltaic inverter includes: a casing, a main circuit board, a photovoltaic connector, an upper plate bracket, and a busbar conductor, and the photovoltaic connector includes a positive connector and a negative connector; the casing includes a bottom housing and a cover plate, the bottom housing and the cover plate enclose an accommodation cavity, the bottom housing includes a bottom plate disposed opposite to the cover plate, and a heat sink is mounted on a side that is of the bottom plate and that is away from the cover plate; the main circuit board is located in the accommodation cavity, and the upper plate bracket is located between the bottom plate and the main circuit board and is fastened to the bottom plate; one end of the positive connector is connected between the upper plate bracket and the main circuit board and is electrically connected to the main circuit board, one end of the negative connector is electrically connected to the main circuit board through the busbar conductor, and the busbar conductor is configured to: uniformly combine currents input by a plurality of negative electrodes and then transmit a combined current to the main circuit board; the photovoltaic connector includes an insulation base and a metal insertion member, one end of the insulation base is located inside the casing, the other end of the insulation base is located outside the casing, and the photovoltaic connector is fastened to the casing through the insulation base; and the insulation base is of a hollow tubular structure, the metal insertion member is wrapped in the insulation base, the metal insertion member is a conductive metal conductor, the metal insertion member includes an interface portion, a fastening portion, and a contact portion, the interface portion is configured to connect to a photovoltaic module, the contact portion is of a flat sheet structure, the contact portion is configured to attach to and connect to the main circuit board or the busbar conductor in a stacking manner, and the fastening portion is configured to mechanically fasten the insulation base.

In the photovoltaic inverter provided in this embodiment of this application, the positive connector and the negative connector may be electrically connected to the main circuit board through the upper plate bracket without a cable, so that a mounting procedure can be simplified, and connection reliability can be improved. In addition, the busbar conductor is used outside the circuit board to combine currents input by negative connectors, so that a quantity of ports on the circuit board can be reduced, a loop length can be shortened, a contact thermal resistance and heat generation can be reduced, adapter efficiency can be improved, and costs of an entire system can be reduced. The contact portion of the metal insertion member is of a sheet structure, and is connected to the main circuit board or the busbar conductor in a stacking manner, so that a contact area between the contact portion and the main circuit board or the busbar conductor may be increased, and a conductive path may be shortened. This improves conductive performance. In addition, the main circuit board is located in the accommodation cavity enclosed by the bottom housing and the cover plate, and the upper plate bracket and the busbar conductor are both located between the main circuit board and the bottom plate. Therefore, in a production and manufacturing process, the upper plate bracket, the busbar conductor, and the photovoltaic connector may be first fastened to the casing, and then the main circuit board is placed in the accommodation cavity for fastening. In this way, an electrical connection process between all photovoltaic connectors and the main circuit board can be basically completed at a time, and a complex cable connection between the photovoltaic connector and the main circuit board and a possibility of a wiring error during manual connection can be avoided. This solution greatly simplifies a production and manufacturing technique, improves production efficiency, and basically does not have a possibility of a wiring fault.

### BRIEF DESCRIPTION OF DRAWINGS

FIG. 1 is a diagram of a photovoltaic power generation system according to an embodiment of this application;
FIG. 2 is a diagram of a circuit structure of a photovoltaic inverter according to an embodiment of this application;
FIG. 3 is a diagram of a structure of a photovoltaic inverter according to an embodiment of this application;
FIG. 4 is a diagram of a structure of a photovoltaic inverter according to an embodiment of this application;
FIG. 5 is a diagram of a structure of a photovoltaic connector according to an embodiment of this application;
FIG. 6 is a diagram of a structure of a metal insertion member of a photovoltaic connector according to an embodiment of this application;
FIG. 7 is a diagram of a connection between a metal insertion member and a circuit board according to an embodiment of this application;
FIG. 8 is a schematic cross-sectional view of a photovoltaic connector according to an embodiment of this application;
FIG. 9 is a schematic cross-sectional view of another photovoltaic connector according to an embodiment of this application;
FIG. 10 is a schematic cross-sectional view of still another photovoltaic connector according to an embodiment of this application;
FIG. 11 is a cross-sectional view of a photovoltaic connector according to an embodiment of this application;
FIG. 12 is a cross-sectional view of another photovoltaic connector according to an embodiment of this application;
FIG. 13 is a diagram of a structure of a metal insertion member of a photovoltaic connector according to an embodiment of this application;
FIG. 14 is a schematic cross-sectional view of a photovoltaic connector according to an embodiment of this application;
FIG. 15 is a diagram of a connection between a photovoltaic module and a photovoltaic inverter shown in FIG. 1;
FIG. 16 is a three-dimensional diagram of structures of some components of a photovoltaic inverter according to an embodiment of this application;
FIG. 17 is a three-dimensional diagram of a structure of an upper plate bracket according to an embodiment of this application; and
FIG. 18 is a three-dimensional diagram of structures of a busbar conductor and an integrated circuit board according to an embodiment of this application.

### DESCRIPTION OF EMBODIMENTS

The following describes the technical solutions of embodiments in this application with reference to the accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

In embodiments of this application, prefix words such as "first", "second", "third", and the like are merely used to distinguish between different described objects, and do not limit a position, a sequence, a priority, a quantity, content, or the like of the described object. In embodiments of this application, use of a prefix word, for example, an ordinal number, for distinguishing between the described objects does not constitute a limitation on the described objects. For descriptions of the described objects, refer to the descriptions in the context in the claims or embodiments. Use of such a prefix word should not constitute a redundant limitation. In addition, in the descriptions of embodiments, unless otherwise specified, "a plurality of" means two or more.

In embodiments of this application, orientation or position relationships indicated by terms such as "upper", "lower", "left", "right", "front", "rear", "top", "bottom", "inside", "outside", or the like are orientation or position relationships shown in the accompanying drawings, and are merely intended for ease of describing this application and simplifying descriptions, but are not intended to indicate or imply that an indicated apparatus or element needs to have a specific orientation or needs to be constructed and operated in a specific orientation. Therefore, this cannot be understood as a limitation on this application.

Reference to "some embodiments" or the like described in this specification indicates that one or more embodiments of this application include a specific feature, structure, or characteristic described with reference to embodiments. Therefore, statements such as "in some embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In this application, "perpendicular" is not strictly perpendicular, but within an allowable error range. "Parallel" is not strictly parallel, but within an allowable error range.

In embodiments of this application, a same reference numeral indicates a same component part or a same part or component. In embodiments of this application, for a plurality of same parts or components, only one part or component may be marked with a reference numeral as an example in the accompanying drawings. For another same part or component, the reference numeral is also applicable. In addition, dimensions and sizes of parts or components shown in the accompanying drawings are merely examples.

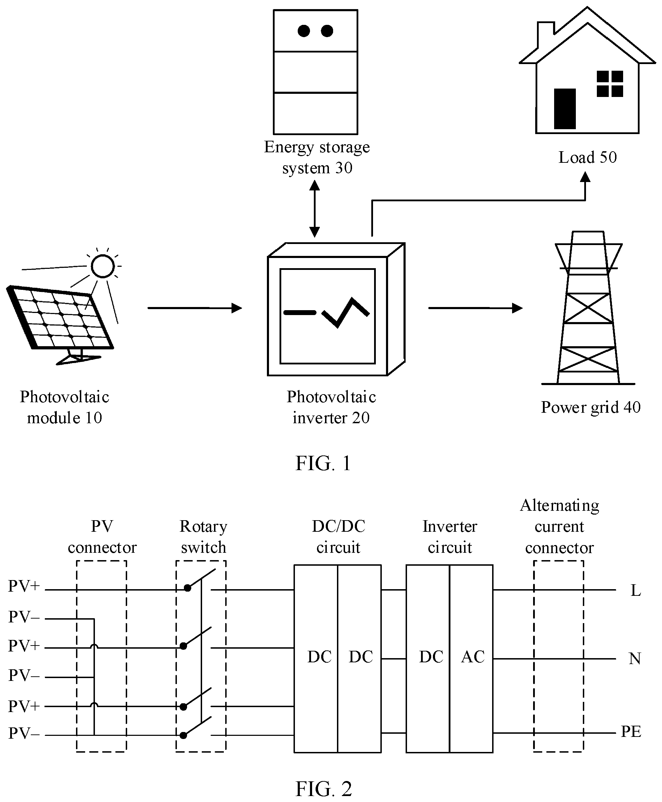

The following first describes in detail, with reference to FIG. 1, a photovoltaic power generation system provided in embodiments of this application.

FIG. 1 is a diagram of a photovoltaic power generation system according to an embodiment of this application. As shown in FIG. 1, the photovoltaic power generation system may include a photovoltaic module 10, a photovoltaic inverter 20, and an energy storage system 30.

Optionally, the photovoltaic power generation system may further include a power grid 40 and a load 50.

Specifically, the photovoltaic inverter 20 can convert a direct current from the photovoltaic module 10 into an alternating current, and transfer the alternating current to the power grid 40 or the load 50. The photovoltaic inverter 20 can transfer the direct current from the photovoltaic module 10 to the energy storage system 30, to charge the energy storage system 30. The photovoltaic inverter 20 can convert a direct current from the energy storage system 30 into an alternating current, and transfer the alternating current to the power grid 40 or the load 50.

It may be understood that when the photovoltaic power generation system includes the photovoltaic module 10, the photovoltaic inverter 20, and the energy storage system 30, the photovoltaic inverter 20 is mainly configured to connect the photovoltaic module 10 to the energy storage system 30, to charge the energy storage system 30. When the photovoltaic power generation system includes the photovoltaic module 10, the photovoltaic inverter 20, the energy storage system 30, the power grid 40, and the load 50, the photovoltaic inverter 20 can be configured to connect the foregoing apparatuses. For example, the photovoltaic inverter 20 connects the photovoltaic module 10 to the energy storage system 30, the photovoltaic inverter 20 connects the photovoltaic module 10 to the power grid 40, the photovoltaic inverter 20 connects the photovoltaic module 10 to the load 50, and the photovoltaic inverter 20 connects the load 50 to the energy storage system 30.

The energy storage system 30 in the photovoltaic power generation system can store and release electric energy. For example, the energy storage system 30 may store direct current electric energy from the photovoltaic module 10, and the energy storage system 30 may supply power to the power grid 40 or the load 50 through the photovoltaic inverter 20. Therefore, application scenarios of the energy storage system 30 are wide, including but not limited to: a household scenario, an industry green power scenario, a smart photovoltaic power station scenario, and the like.

It can be learned from the foregoing description that the photovoltaic inverter 20 is a converter that can convert a direct current into an alternating current. For example, the photovoltaic inverter 20 may include two direct current ports (for example, a direct current port 1 and a direct current port 2) and one alternating current port. The two direct current ports are respectively configured to connect to the photovoltaic module 10 and the energy storage system 30. For example, the direct current port 1 is configured to connect to the photovoltaic module 10, and the direct current port 2 is configured to connect to the energy storage system 30; and the alternating current port may be configured to connect to the power grid 40 or the load 50.

The photovoltaic module 10 may feed the power grid 40 and supply power to the load 50 through the direct current port 1. The energy storage system 30 may supply power to the load 50 through the direct current port 2. The power grid 40 may supply power to the load 50 through the alternating current port. In other words, the photovoltaic inverter 20 is a connection hub between the load 50 and an energy module (which may include the photovoltaic module 10, the energy storage system 30, and the power grid 40).

FIG. 2 is a diagram of a circuit structure of a photovoltaic inverter according to an embodiment of this application.

Refer to FIG. 2. In a photovoltaic power generation system, the photovoltaic inverter includes components such as a rotary switch, a photovoltaic connector, and an alternating current connector. The photovoltaic connector (the PV connector) is configured to input a direct current generated by a photovoltaic module by using light energy. The rotary switch is mainly used for current conduction and cutoff. An inverter circuit (a DC/AC circuit) is configured to convert a direct current into an alternating current. A direct current-to-direct current circuit (the DC/DC circuit) is configured to convert a voltage value into another voltage value in a direct current circuit. The alternating current connector is configured to transfer an alternating current to a power grid and/or a load.

It should be noted that the DC/AC circuit and the DC/DC circuit are disposed on a circuit board of the photovoltaic inverter, and components such as the rotary switch, the photovoltaic connector, a signal connector, and the alternating current connector of the photovoltaic inverter are directly connected to the circuit board, and are connected to each other through a metal trace on the circuit board, to form the circuit structure shown in FIG. 2. In this way, the rotary switch, the photovoltaic connector, the alternating current connector, and the circuit board are connected to each other without a cable. This improves space utilization of the photovoltaic inverter.

In the embodiment shown in FIG. 2, the rotary switch is a multi-pole switch. The multi-pole switch means that the rotary switch includes a plurality of breaking units, and each breaking unit corresponds to one pole of the multi-pole switch, that is, the multi-pole switch may simultaneously break a plurality of circuits. More specifically, in this embodiment, the rotary switch includes four breaking units, and the four breaking units include three breaking units connected to PVs+ and one breaking unit connected to a PV-. A side that is of the rotary switch and that is connected to the PV may be referred to as an input side of the rotary switch, and a side that is of the rotary switch and that is connected to the DC/DC circuit may be referred to as an output side of the rotary switch. One group of PVs (a combination of one PV+ and one PV-) may be referred to as one PV string. In this embodiment, three PV strings are connected to the input side of the rotary switch, PVs+ of the three PV strings are respectively connected to the breaking units of the rotary switch, and a PV- of each of the three PV strings is connected to one breaking unit of the rotary switch after being combined.

It should be understood that, to implement a function of the photovoltaic inverter, the circuit board may further include another circuit, for example, a rectifier circuit (an AC/DC circuit) configured to convert an alternating current into a direct current. A type and a quantity of circuits disposed on the circuit board are not limited in this embodiment of this application.

In this application, the circuit board 120 may also be referred to as a printed circuit board or a mainboard. The printed circuit board is a support body of an electronic component, and is also used as a carrier for an electrical connection of the electronic component. Usually, a printed circuit board on which no electronic component is soldered may be referred to as a PCB single board. A printed circuit board on which an electronic component is soldered may be referred to as a printed circuit board assembly (printed circuit board assembly, PCBA). A conductive pattern or a metal trace is disposed on the circuit board, and electronic components may be electrically connected to each other through the conductive pattern or the metal trace. The electronic components carried on the circuit board may form a plurality of functional modules to implement corresponding functions. For example, an inverter circuit module is configured to convert a direct current into an alternating current, and a rectifier circuit module is configured to convert an alternating current into a direct current.

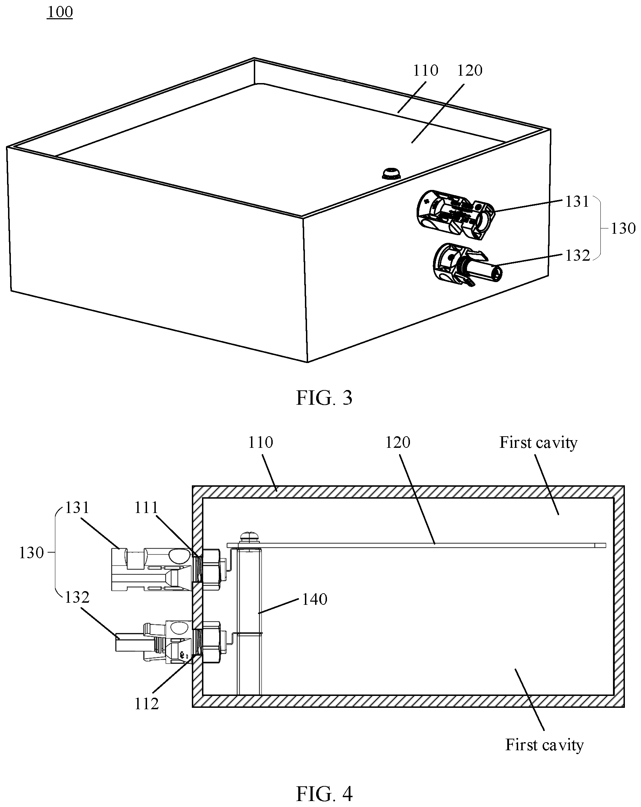

FIG. 3 is a diagram of a structure of a photovoltaic inverter 100 according to an embodiment of this application. FIG. 4 is a diagram of a structure of the photovoltaic inverter 100 according to an embodiment of this application. The photovoltaic inverter 100 shown in FIG. 3 and FIG. 4 may be an example structure of the photovoltaic inverter 20 shown in FIG. 1.

Refer to FIG. 3 and FIG. 4. The photovoltaic inverter 100 includes a housing 110, a circuit board 120, and a photovoltaic connector 130. The housing 110 may include a top plate, a bottom plate, and a side plate. The top plate, the bottom plate, and the side plate of the housing 110 may enclose an accommodating cavity. The top plate and the bottom plate of the housing 110 are disposed opposite to each other.

The circuit board 120 is located in the accommodating cavity enclosed by the housing 110, and the circuit board 120 divides, into a first cavity and a second cavity, the accommodating cavity enclosed by the housing 110. The first cavity is accommodation space enclosed by the bottom plate of the housing 110, the side plate of the housing 110, and the circuit board 120. The second cavity is accommodation space enclosed by the top plate of the housing 110, the side plate of the housing 110, and the circuit board 120. In addition, a distance between the circuit board 120 and the bottom plate of the housing 110 is greater than a distance between the circuit board 120 and the top plate of the housing 110, that is, a height of the first cavity is greater than a height of the second cavity.

In some embodiments, the circuit board 120 is parallel to the bottom plate and/or the top plate of the housing 110.

In this embodiment of this application, conductive patterns or metal traces are disposed on both sides of the circuit board 120, and electrical components are mounted on the both sides of the circuit board 120. To be specific, a part of the electrical components are located in the first cavity, and the part of the electrical components are connected to a side that is of the circuit board 120 and that is close to the bottom plate of the housing 110. The other part of the electrical components are located in the second cavity, and the part of the electrical components are connected to a side that is of the circuit board 120 and that is close to the top plate of the housing 110.

Specifically, the first cavity may be configured to accommodate some electrical components with a large volume, a large height, or a high power, for example, large electrical components such as a power inductor, a bus capacitor, a power module, and a switching transistor. The second cavity may be configured to accommodate some electrical components with a small volume, a small height, or a low power, for example, small electrical components such as a surface mount device capacitor, a surface mount device resistor, or an indicator. The first cavity is configured to accommodate an electrical component whose height is greater than or equal to a first preset value. The second cavity is configured to accommodate an electrical component whose height is less than or equal to a second preset value. The first preset value is greater than the second preset value. That is, a height of the electrical component connected to the side that is of the circuit board and that is close to the bottom plate is greater than or equal to the first preset value, and a height of the electrical component connected to the side that is of the circuit board and that is close to the top plate is less than or equal to the second preset value. The first preset value and the second preset value may be preset by a skilled person. For example, the first preset value may be approximately 9 mm, and the second preset value may be approximately 5 mm.

In some embodiments, the photovoltaic inverter 100 may further include a heat sink, and the heat sink is connected to a side that is of the bottom plate of the housing 110 and that is away from the circuit board 120. Therefore, a condition for heat dissipation of the electrical component in the first cavity is good. The large electrical component has a high power and a high heat generation amount. Mounting the large electrical component on the side that is of the circuit board 120 and that is close to the bottom plate of the housing 110 helps improve heat dissipation effect of the photovoltaic inverter.

The first cavity may alternatively accommodate some electrical components with a small volume and a small height, for example, an electrical component with a small volume but a high heat generation amount. That is, a height of the electrical component connected to the side that is of the circuit board 120 and that is close to the bottom plate may alternatively be less than the first preset value. However, due to a height limitation of the first cavity and the second cavity, the first cavity and the second cavity cannot accommodate electrical components whose heights exceed the limitation.

According to an actual requirement, the electrical components connected to the circuit board 120 may be appropriately arranged on the two sides of the circuit board 120, to improve space utilization of the photovoltaic inverter and improve heat dissipation effect of the photovoltaic inverter.

In a photovoltaic power generation system, one end of the photovoltaic connector 130 is connected to a photovoltaic module (or a photovoltaic string), and the other end is connected to the circuit board 120, and is connected to a DC/DC circuit or a DC/AC circuit through a metal trace on the circuit board 120, to input a direct current generated by the photovoltaic module by using light energy. The photovoltaic connector 130 may include a plurality of positive connectors and a plurality of negative connectors. The positive connector is a connector connected to a positive electrode of the photovoltaic module, and the negative connector is a connector connected to a negative electrode of the photovoltaic module. The plurality of positive connectors are in a one-to-one correspondence with the plurality of negative connectors, and a positive connector and a negative connector that correspond to each other are connected to a same photovoltaic module.

Refer to FIG. 3 and FIG. 4. The photovoltaic connector 130 may include a positive connector 131 and a negative connector 132. Two through holes are provided on a side wall of the housing 110, the positive connector 131 and the negative connector 132 separately pass through one of the through holes and extend into the first cavity, to connect to the circuit board 120.

It should be understood that the photovoltaic connector 130 may include a plurality of positive connectors and a plurality of negative connectors. This is not limited in this embodiment of this application.

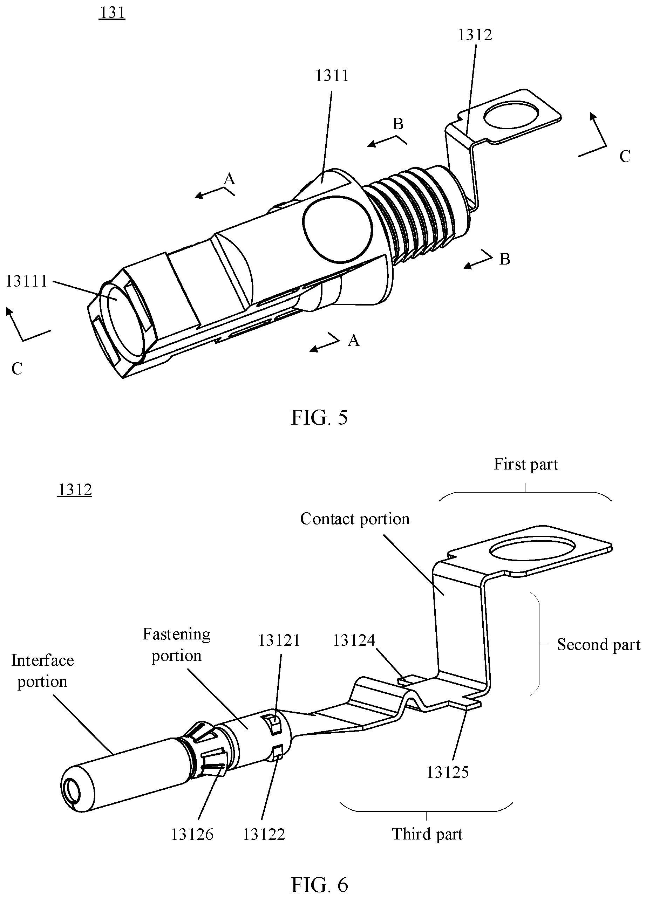

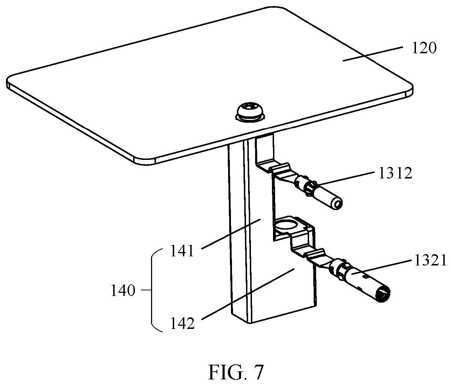

The following uses the positive connector 131 as an example for description. FIG. 5 is a diagram of a structure of the photovoltaic connector according to an embodiment of this application. FIG. 6 is a diagram of a structure of a metal insertion member of the photovoltaic connector according to an embodiment of this application. FIG. 7 is a diagram of a connection between the metal insertion member and the circuit board according to an embodiment of this application.

Refer to FIG. 4 and FIG. 5. The positive connector 131 includes an insulation base 1311 and a positive metal insertion member 1312. The insulation base 1311 extends into the first cavity through a first through hole 111 on the side wall of the housing 110, and the insulation base 1311 is fastened to the housing 110.

In this application, a specific manner of the fixed connection includes but is not limited to one or more of the following: bonding, welding, threaded fastening connection, clamping, and riveting.

For example, a diameter of a part that is of the insulation base 1311 and that is located outside the housing 110 is greater than a diameter of the first through hole 111, and a thread is disposed on an outer circumferential wall of a part that is of the insulation base 1311 and that is located in the accommodating cavity enclosed by the housing 110, so that the insulation base 1311 may be fastened to the housing 110 through a threaded fastening connection.

It should be noted that each photovoltaic connector includes an insulation base and a metal insertion member, and each photovoltaic connector may correspond to one through hole on the housing 110.

It should be noted that the insulation base may be understood as a component of the photovoltaic connector, or may be understood as a component of the housing 110. When the insulation base is a component of the housing 110, the insulation base and the housing 110 may be of an integrated structure, or may be of a separate structure. This is not limited in this embodiment of this application. When the insulation base and the housing 110 are of a separate structure, the insulation base and the housing 110 are two different components, and may be assembled together through clamping, snap-fitting, a screw, a bolt, and the like, and may be separated when the insulation base and the housing 110 need to be disassembled. When the insulation base and the housing 110 are of an integrated structure, a connection relationship between the insulation base and the housing 110 is inseparable. For example, the insulation base and the housing 110 may be manufactured in an integrated manner, and the insulation base is a part of the housing 110. For another example, the insulation base and the housing 110 may be assembled in a connection manner, for example, riveting.

The insulation base 1311 is of a hollow tubular structure. As shown in FIG. 4 and FIG. 5, the insulation base 1311 may communicate between external space of the housing 110 and the accommodating cavity enclosed by the housing 110.

In an example, a second through hole 13111 is provided on the insulation base 1311, and the second through hole 13111 may communicate between the external space of the housing 110 and the accommodating cavity enclosed by the housing 110.

In this embodiment of this application, the positive metal insertion member 1312 extends into the first cavity of the housing 110 through the insulation base 1311, and is connected to the side that is of the circuit board 120 and that is close to the bottom plate of the housing 110.

Refer to FIG. 4 to FIG. 6. The positive metal insertion member 1312 includes an interface portion, a fastening portion, and a contact portion. The interface portion is configured to connect to the photovoltaic module. The contact portion is configured to connect to the circuit board 120. The fastening portion is located between the interface portion and the contact portion, one end of the fastening portion is connected to the interface portion, and the other end is connected to the contact portion.

Refer to FIG. 6. The contact portion may include a first part, a second part, and a third part. The first part of the contact portion is a part that connects the positive metal insertion member 1312 and the circuit board 120. The third part of the contact portion is connected to the fastening portion. The second part of the contact portion is located between the first part and the third part, to be specific, one end of the second part is connected to the first part, and the other end is connected to the third part.

In this embodiment of this application, the contact portion is of a sheet structure, and the interface portion and the fastening portion are of a cylindrical structure, or may be of a hollow cylindrical structure. The interface portion, the fastening portion, and the third part of the contact portion of the positive metal insertion member 1312 are located in the insulation base, and the first part and the second part of the contact portion are located outside the insulation base 1311.

Still refer to FIG. 6. A structure of the contact portion is similar to a Z shape, the first part and the third part of the contact portion may be parallel to the circuit board 120, and the second part of the contact portion may be perpendicular to the circuit board 120. It may be understood that the contact portion may be bent to be close to the circuit board 120. That is, the contact portion is bent at a joint between the second part and the third part, and the contact portion is bent at a joint between the first part and the second part, so that the second part of the contact portion extends toward the circuit board 120, and the first part of the contact portion and the circuit board 120 are attached together.

In some embodiments, the third part of the contact portion may not be located in the insulation base 1311, or only a part of the third part of the contact portion is located in the insulation base 1311.

Refer to FIG. 4 and FIG. 7. The photovoltaic inverter 100 may further include an upper plate bracket 140. The upper plate bracket 140 is located in the first cavity, and the upper plate bracket 140 is fastened to the bottom plate of the housing 110.

It should be noted that a material of the upper plate bracket is an insulation material, for example, plastic.

The upper plate bracket 140 is configured to support the part (that is, the first part of the contact portion) that connects the positive metal insertion member 1312 and the circuit board 120. Specifically, the upper plate bracket 140 may include a positive support column 141. The first part of the contact portion of the positive metal insertion member 1312 laps a side that is of the positive support column 141 and that is close to the circuit board 120, and a height of the positive support column 141 is close to a height of the circuit board 120, so that the first part of the contact portion of the positive metal insertion member 1312 is attached to the side that is of the circuit board 120 and that is close to the bottom plate of the housing 110. It may be understood that, the circuit board 120, the first part of the contact portion of the positive metal insertion member 1312, and the positive support column 141 are stacked, and the first part of the contact portion is located between the positive support column 141 and the circuit board 120. In this way, stability of a connection between the positive metal insertion member 1312 and the circuit board 120 can be improved, and poor contact can be avoided.

It should be understood that the height of the positive support column 141 is a distance between a surface that is of the positive support column 141 and that is close to the circuit board 120 and the bottom plate of the housing 110. The height of the circuit board 120 is a distance between a lower surface of the circuit board 120 (namely, a surface that is of the circuit board 120 and that is close to the bottom plate of the housing 110) and the bottom plate of the housing 110.

There are a plurality of manners of fastening or electrically connecting the circuit board 120 to the first part of the contact portion. For example, refer to FIG. 7. The first part of the contact portion and the circuit board 120 include two through holes provided opposite to each other. In addition, a blind hole is provided at one end that is of the positive support column 141 and that is close to the circuit board 120, and a nut is disposed in the blind hole. A metal screw extends into the blind hole of the positive support column 141 through the two through holes disposed opposite to each other, and is connected to the metal nut through a thread. In this way, the first part of the contact portion is fastened to the circuit board 120, and the first part of the contact portion is electrically connected to the metal trace on the circuit board 120.

In some embodiments, the metal nut disposed in the blind hole and the positive support column 141 may be clamped together, and the metal nut cannot rotate in the blind hole, but the metal nut may move in a direction perpendicular to the circuit board 120. When the screw is tightened, the nut moves toward the circuit board 120 under a force, to tightly press the first part of the contact portion on the circuit board 120.

In an actual assembly process, the insulation base 1311 is first inserted into the first through hole 111 of the housing 110, and is fastened to the housing 110; then the positive metal insertion member 1312 is inserted into the insulation base 1311; after that, the positive support column 141 of the upper plate bracket 140 is pushed below the first part of the contact portion of the positive metal insertion member 1312, so that the first part of the contact portion is attached to the circuit board 120; and finally, the circuit board 120 is connected to the first part of the contact portion.

If the positive metal insertion member 1312 rotates, the first part of the contact portion is not parallel to the circuit board 120, and the first part of the contact portion cannot be attached to the circuit board 120. This increases difficulty in mounting the photovoltaic inverter, and may also cause poor contact. In addition, in an actual use process, a user may insert and withdraw a cable a plurality of times. As a result, the positive metal insertion member 1312 rotates, and the contact portion is twisted and broken.

In this embodiment of this application, a limiting structure is formed on an inner wall of the insulation base 1311, and a limiting protrusion is formed on a circumferential surface of the fastening portion of the positive metal insertion member 1312. The limiting structure is configured to be clamped with the limiting protrusion in a circumferential direction of the fastening portion, to prevent the positive metal insertion member 1312 from rotating in the insulation base 1311.

With reference to the accompanying drawings, the following describes in detail the limiting structure formed on the inner wall of the insulation base 1311 and the limiting protrusion formed on the circumferential surface of the fastening portion of the positive metal insertion member 1312.

The positive metal insertion member 1312 of the positive connector and a negative metal insertion member 1321 of the negative connector may be electrically connected to the main circuit board 120 through the upper plate bracket 140 without a cable, so that a mounting procedure can be simplified and connection reliability can be improved. In addition, a busbar conductor is used outside the circuit board 120 to combine currents input by negative connectors, so that a quantity of ports on the main circuit board 120 can be reduced, a loop length can be shortened, a contact thermal resistance and heat generation can be reduced, adapter efficiency can be improved, and costs of an entire system can be reduced. Contact portions of the metal insertion member 1321 and the metal insertion member 1312 are of a sheet structure, and are connected to the main circuit board 120 or the busbar conductor in a stacking manner, so that a contact area between the contact portion and the main circuit board 120 or the busbar conductor may be increased, and a conductive path may be shortened. This improves conductive performance. In addition, the main circuit board is located in an accommodation cavity enclosed by a bottom housing and a cover plate, and the upper plate bracket 140 and the busbar conductor are both located between the main circuit board 120 and the bottom plate. Therefore, in a production and manufacturing process, the upper plate bracket 140, the busbar conductor, and the photovoltaic connector may be first fastened to a casing, and then the main circuit board 120 is placed in the accommodation cavity for fastening. In this way, an electrical connection process between all photovoltaic connectors and the main circuit board 120 can be basically completed at a time, and a complex cable connection between the photovoltaic connector and the main circuit board 120 and a possibility of a wiring error during manual connection can be avoided. This solution greatly simplifies a production and manufacturing technique, improves production efficiency, and basically does not have a possibility of a wiring fault.

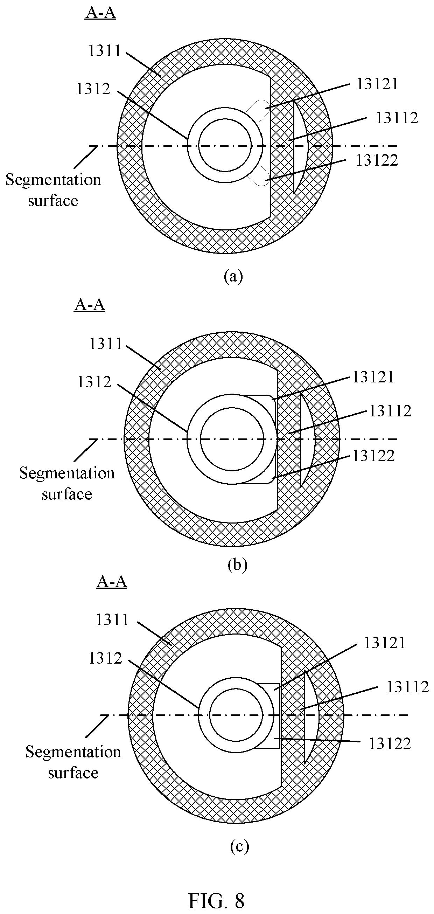

FIG. 8 is a schematic cross-sectional view of the photovoltaic connector shown in FIG. 4 cut along A-A. (a) in FIG. 8, (b) in FIG. 8, and (c) in FIG. 8 are schematic cross-sectional views of three different structures.

Refer to FIG. 6 and (a) in FIG. 8. The insulation base 1311 includes a limiting plate 13112, two ends of the limiting plate 13112 are fastened to the inner wall of the insulation base 1311, and a distance between the limiting plate 13112 and an axis of the fastening portion of the positive metal insertion member 1312 is greater than or equal to a radius of the fastening portion. That is, the limiting plate 13112 does not affect a mounting position of the positive metal insertion member 1312.

A side that is of the limiting plate 13112 and that is close to the fastening portion may be a plane, and the limiting plate 13112 is disposed in parallel with the axis of the fastening portion. That is, distances between the limiting plate 13112 and the axis of the fastening portion are equal at all positions.

In some embodiments, the limiting plate 13112 may not be disposed in parallel to the axis of the fastening portion.

In some embodiments, the limiting plate 13112 is perpendicular to the circuit board 120.

A first protrusion portion 13121 and a second protrusion portion 13122 are disposed on a circumferential wall of the fastening portion of the positive metal insertion member 1312. The first protrusion portion 13121 abuts against the limiting plate 13112, to limit clockwise rotation of the positive metal insertion member 1312, and the second protrusion portion 13122 abuts against the limiting plate 13112, to limit counterclockwise rotation of the positive metal insertion member 1312. Specifically, the first protrusion portion and the second protrusion portion are separately in contact with the limiting plate, and contact points between the first protrusion portion and the limiting plate and between the second protrusion portion and the limiting plate are located on two sides of a projection of the axis of the fastening portion onto the limiting plate.

The first protrusion portion 13121 and the limiting plate, and the second protrusion portion 13122 and the limiting plate may not have unique contact points. In this case, at least one contact point between the first protrusion portion 13121 and the limiting plate 13112 should be located on one side of the projection of the axis of the fastening portion onto the limiting plate, and at least one contact point between the second protrusion portion 13122 and the limiting plate 13112 should be located on the other side of the projection of the axis of the fastening portion onto the limiting plate.

Refer to FIG. 8. It is assumed that the fastening portion is divided into an upper part and a lower part by a segmentation surface. The segmentation surface is perpendicular to the limiting plate 13112, and the segmentation surface passes through the axis of the fastening portion. The first protrusion portion 13121 is located on a side that is of the upper part of the fastening portion and that is close to the limiting plate 13112, and abuts against the limiting plate 13112. The second protrusion portion 13122 is located on a side that is of the lower part of the fastening portion and that is close to the limiting plate 13112, and abuts against the limiting plate 13112. That is, the first protrusion portion 13121 is located between the upper part of the fastening portion and the limiting plate 13112, and the second protrusion portion 13122 is located between the lower part of the fastening portion and the limiting plate 13112.

If the limiting plate 13112 is divided into an upper part and a lower part by a segmentation surface, where the segmentation surface is perpendicular to the limiting plate 13112, and the segmentation surface passes through the axis of the fastening portion, the contact point between the first protrusion portion 13121 and the limiting plate 13112 is located on the upper part of the limiting plate 13112, and the contact point between the second protrusion portion 13122 and the limiting plate 13112 is located on the lower part of the limiting plate 13112. That is, the contact points between the first protrusion portion 13121 and the limiting plate 13112 and between the second protrusion portion 13122 and the limiting plate 13112 are respectively located on two sides of the segmentation surface.

The first protrusion portion 13121 and the limiting plate, and the second protrusion portion 13122 and the limiting plate may not have unique contact points. In this case, at least one contact point between the first protrusion portion 13121 and the limiting plate 13112 should be located on one side of the segmentation surface, and at least one contact point between the second protrusion portion 13122 and the limiting plate 13112 should be located on the other side of the segmentation surface.

A height of the first protrusion portion 13121 and a height of the second protrusion portion 13122 are greater than a shortest distance between an outer circumferential wall of the fastening portion and the limiting plate 13112. A height of the protrusion portion is a height of the protrusion portion in a radial direction of the fastening portion, namely, a distance between the protrusion portion and the outer circumferential wall of the fastening portion in the radial direction of the fastening portion. Alternatively, a height of the protrusion portion may be a distance between a contact point between the protrusion portion and the limiting plate and the outer circumferential wall of the fastening portion in a radial direction of the fastening portion. If the protrusion portion and the limiting plate do not have a unique contact point, a height of at least one contact point between the first protrusion portion 13121 and the limiting plate 13112 should be greater than the shortest distance between the outer circumferential wall of the fastening portion and the limiting plate 13112, and a height of at least one contact point between the second protrusion portion 13122 and the limiting plate 13112 should be greater than the shortest distance between the outer circumferential wall of the fastening portion and the limiting plate 13112.

In some embodiments, with reference to (b) and (c) in FIG. 8, sides that are of the first protrusion portion 13121 and the second protrusion portion 13122 and that are close to the limiting plate 13112 are planes, and the planes that are of the first protrusion portion 13121 and the second protrusion portion 13122 and that are close to the limiting plate 13112 are parallel to the limiting plate 13112, and are attached to the limiting plate 13112.

In some embodiments, with reference to (c) in FIG. 8, the first protrusion portion 13121 and the second protrusion portion 13122 may be connected to each other as a whole.

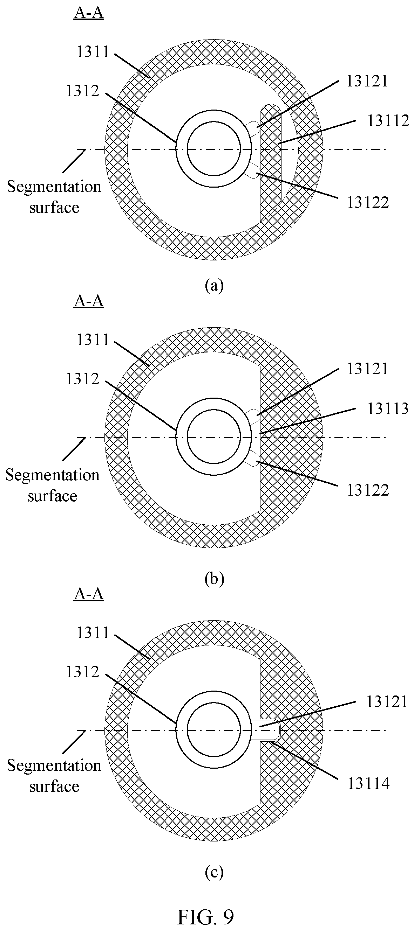

FIG. 9 is a schematic cross-sectional view of the photovoltaic connector shown in FIG. 4 cut along A-A. As shown in (a) in FIG. 9, one end of the limiting plate 13112 is fastened to the inner wall of the insulation base 1311. That is, in this embodiment of this application, at least one end of the limiting plate 13112 is fastened to the inner wall of the insulation base 1311.

As shown in (b) in FIG. 9, an inner wall that is of the insulation base 1311 and that is close to the first protrusion portion 13121 and the second protrusion portion 13122 forms a limiting plane 13113. That is, the inner wall of the insulation base 1311 may not be a regular circle. A structure of (a) in FIG. 9 may be understood as follows: The limiting plane 13113 is formed by a surface that is of the limiting plate 13112 and that is close to the positive metal insertion member 1312, and a surface that is of the limiting plate 13112 and that is away from the positive metal insertion member 1312 is connected to the inner wall of the insulation base 1311 as a whole. In this case, the limiting plate 13112 is used as a part of the insulation base 1311.

A contact point between the first protrusion portion 13121 and the limiting plane 13113 is located on one side of a projection of the axis of the fastening portion onto the limiting plane 13113, and a contact point between the second protrusion portion 13122 and the limiting plane 13113 is located on the other side of the projection of the axis of the fastening portion onto the limiting plane 13113.

Similar to the embodiment shown in FIG. 8, it is assumed that there is a segmentation surface that divides the fastening portion into two parts, the segmentation surface passes through the axis of the fastening portion, and the segmentation surface is perpendicular to the limiting plane 13113. In this case, the contact point between the first protrusion portion 13121 and the limiting plane 13113 is located on one side of the segmentation surface, and the contact point between the second protrusion portion 13122 and the limiting plane 13113 is located on the other side of the segmentation surface.

In some embodiments, the limiting plane 13113 may alternatively be a curved surface.

As shown in (c) in FIG. 9, at least one limiting groove 13114 is formed on the inner wall of the insulation base 1311, at least one protrusion portion is disposed on the fastening portion, and the at least one protrusion portion is inserted into the at least one limiting groove 13114, to limit rotation of the positive metal insertion member 1312 relative to the insulation base 1311.

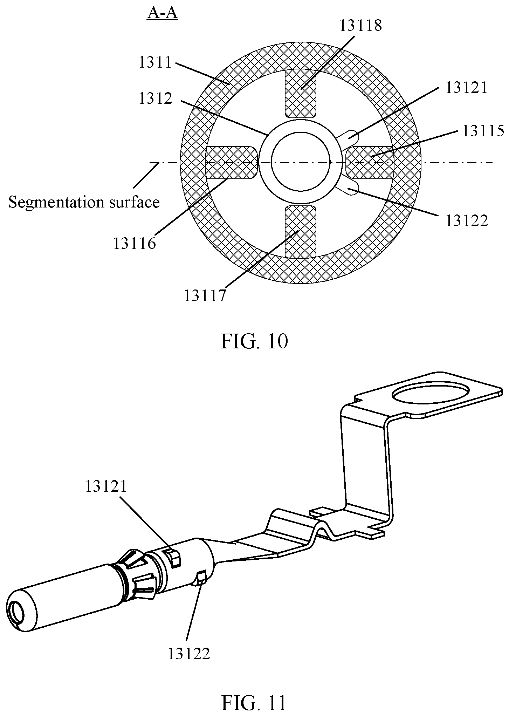

FIG. 10 is a schematic cross-sectional view of the photovoltaic connector shown in FIG. 4 cut along A-A. As shown in FIG. 10, a first support column 13115 and a second support column 13116 are disposed opposite to each other in the insulation base 1311, one end of the first support column 13115 and one end of the second support column 13116 are fastened to the inner wall of the insulation base 1311, and the other end of the first support column 13115 and the other end of the second support column 13116 extend toward the fastening portion of the positive metal insertion member 1312. The first support column 13115 is in contact with both the first protrusion portion 13121 and the second protrusion portion 13122, and at least a part of the first support column 13115 is located between the first protrusion portion 13121 and the second protrusion portion 13122, to limit rotation of the metal insertion member relative to the insulation base 1311. A distance between an end that is of the second support column 13116 and that is close to the positive metal insertion member 1312 and the axis of the fastening portion of the positive metal insertion member 1312 is equal to or close to the radius of the fastening portion. That is, the end that is of the second support column 13116 and that is close to the positive metal insertion member 1312 abuts against a circumferential surface of the positive metal insertion member 1312, to limit movement of the positive metal insertion member 1312 in a direction away from the first support column 13115. In this way, a position relationship between the first protrusion portion 13121, the second protrusion portion 13122, and the first support column 13115 cannot be changed, and the metal positive metal insertion member 1312 cannot rotate in the insulation base 1311.

In some embodiments, the first support column 13115 may be plate-shaped, so that the first support column 13115 may be conveniently inserted between the first protrusion portion 13121 and the second protrusion portion 13122.

Similar to the embodiment shown in FIG. 8, a contact point between the first protrusion portion 13121 and the first support column 13115 is located on one side of a projection of the axis of the fastening portion onto an end surface that is of the first support column 13115 and that is close to the fastening portion, and a contact point between the second protrusion portion 13122 and the first support column 13115 is located on the other side of the projection of the axis of the fastening portion onto the end surface that is of the first support column 13115 and that is close to the fastening portion.

Similar to the embodiment shown in FIG. 8, it is assumed that there is a segmentation surface that divides the fastening portion into two parts, the segmentation surface passes through the axis of the fastening portion, and the segmentation surface is perpendicular to the end surface that is of the first support column 13115 and that is close to the fastening portion. In this case, the contact point between the first protrusion portion 13121 and the first support column 13115 is located on one side of the segmentation surface, and the contact point between the second protrusion portion 13122 and the first support column 13115 is located on the other side of the segmentation surface.

In some embodiments, with reference to FIG. 10, a third support column 13117 and a fourth support column 13118 are further disposed opposite to each other in the insulation base 1311. For structures of the third support column 13117 and the fourth support column 13118, refer to related descriptions of the first support column 13115 or the second support column 13116. Details are not described herein again. The first support column 13115, the second support column 13116, the third support column 13117, and the fourth support column 13118 surround an outer circumference of the fastening portion, to limit deviation of the metal insertion member in the insulation base 1311, and avoid a change in a position relationship between the first protrusion portion 13121, the second protrusion portion 13122, and the first support column 13115.

In some embodiments, the third support column 13117 and the fourth support column 13118 are perpendicular to the circuit board 120, and the first support column 13115 and the second support column 13116 are parallel to the circuit board 120.

It should be understood that, in the foregoing embodiments, for example, in the embodiments shown in FIG. 8 and FIG. 9, a second support column 13116 may alternatively be disposed in the insulation base 1311, and the second support column 13116 is disposed opposite to the limiting plate 13112, the limiting plane 13113, or the limiting groove 13114, to limit movement of the positive metal insertion member 1312 in a direction away from the limiting plate 13112, the limiting plane 13113, or the limiting groove 13114, and avoid a change in a position relationship between the limiting protrusion on the fastening portion and the limiting plate 13112, the limiting plane 13113, or the limiting groove 13114.

In this embodiment of this application, the protrusion portion formed on the circumferential surface of the fastening portion may also be referred to as the limiting protrusion, and the limiting plate 13112, the limiting plane 13113, the limiting groove 13114, and the first support column 13115 may all be referred to as limiting structures formed on the inner wall of the insulation base 1311. The limiting structure formed on the inner wall of the insulation base 1311 is configured to be clamped, in the circumferential direction of the fastening portion, with the limiting protrusion formed on the circumferential surface of the fastening portion, to limit rotation of the metal insertion member relative to the insulation base 1311.

FIG. 11 is a diagram of a structure of a metal insertion member according to an embodiment of this application. As shown in FIG. 11, a first protrusion portion 13121 and a second protrusion portion 13122 may alternatively be spaced apart in an axial direction of a fastening portion, that is, the first protrusion portion 13121 and the second protrusion portion 13122 are spaced at a distance in the axial direction of the fastening portion.

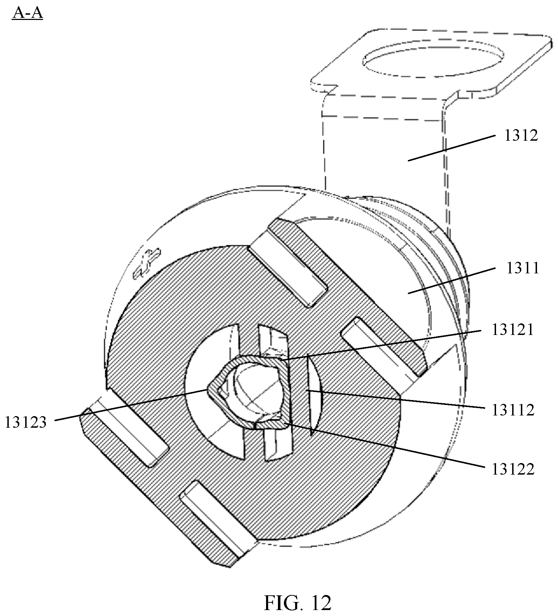

FIG. 12 is a cross-sectional view of the photovoltaic connector shown in FIG. 4 cut along A-A. As shown in FIG. 12, a third protrusion portion 13123 may be further formed on the circumferential surface of the fastening portion of the positive metal insertion member 1312, the third protrusion portion 13123 is located on a side that is of the fastening portion and that is away from the limiting plate 13112, and the third protrusion portion 13123 abuts against the inner wall of the insulation base 1311, to limit movement of the positive metal insertion member 1312 in a direction away from the limiting plate 13112, and avoid a change in a clamping relationship between the first protrusion portion 13121, the second protrusion portion 13122, and the limiting plate 13112.

In some embodiments, the third protrusion portion 13123 abuts against the end (not shown in the figure) that is of the second support column 13116 and that is close to the positive metal insertion member 1312, to prevent the positive metal insertion member 1312 from moving in a direction away from a limiting structure.

It should be noted that the first protrusion portion 13121, the second protrusion portion 13122, and the third protrusion portion 13123 are located on a side of a part that is of the insulation base 1311 and on which an inner diameter of the insulation base 1311 is equal to a diameter of the fastening portion.

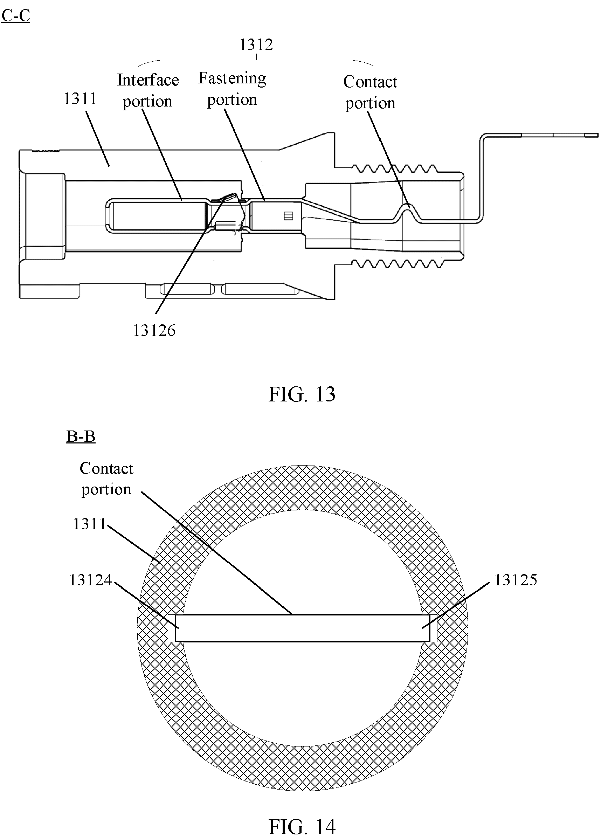

FIG. 13 is a cross-sectional view of the photovoltaic connector shown in FIG. 4 cut along C-C. As shown in FIG. 13, inner diameters of the insulation base 1311 at different positions may be different. An inner diameter of at least a part of the insulation base 1311 is the same as or similar to the diameter of the fastening portion of the positive metal insertion member 1312, to limit deviation of the positive metal insertion member 1312 in the insulation base 1311, and avoid a change in a position relationship between the limiting protrusion and the limiting structure.

Refer to FIG. 13. The positive metal insertion member 1312 may be inserted into the insulation base 1311 from one end that is of the insulation base 1311 and that is located in the accommodating cavity enclosed by the housing 110, and at least a part of the fastening portion of the positive metal insertion member 1312 passes through the part that is of the insulation base 1311 and on which the inner diameter of the insulation base 1311 is equal to the diameter of the fastening portion. The positive metal insertion member 1312 further includes an elastic fastening ring 13126. One end that is of the elastic fastening ring 13126 and that is away from the contact portion of the positive metal insertion member 1312 is fastened to the circumferential surface of the fastening portion of the positive metal insertion member 1312, and the other end is tilted.

The elastic fastening ring 13126 is elastic, and a tilted part of the elastic fastening ring 13126 may be press-fitted on a surface of the fastening portion, so that the fastening portion easily passes through the part that is of the insulation base 1311 and on which the inner diameter of the insulation base 1311 is equal to the diameter of the fastening portion. After the elastic fastening ring 13126 passes through the part that is of the insulation base 1311 and on which the inner diameter of the insulation base 1311 is equal to the diameter of the fastening portion, an unfastened end of the elastic fastening ring 13126 is tilted, and abuts against the part that is of the insulation base 1311 and on which the inner diameter of the insulation base 1311 is equal to the diameter of the fastening portion.

In this embodiment of this application, the part that is of the insulation base 1311 and on which the inner diameter of the insulation base 1311 is equal to the diameter of the fastening portion is located between the elastic fastening ring 13126 and the third protrusion portion 13123. In this way, the elastic fastening ring 13126 and the third protrusion portion 13123 clamp, in the axial direction of the fastening portion, the part that is of the insulation base 1311 and on which the inner diameter of the insulation base 1311 is equal to the diameter of the fastening portion, to limit movement of the positive metal insertion member 1312 in an axial direction of the insulation base, that is, limit forward and backward movement of the positive metal insertion member 1312 in the insulation base, and avoid a change in a position relationship between the limiting protrusion formed on the circumferential surface of the fastening portion and the limiting structure formed on the inner wall of the insulation base 1311.

In some embodiments, the first protrusion portion 13121 or the second protrusion portion 13122 abuts against the other side of the part that is of the insulation base 1311 and on which the inner diameter of the insulation base 1311 is equal to the diameter of the fastening portion.

FIG. 14 is a schematic cross-sectional view of the photovoltaic connector shown in FIG. 4 cut along B-B. Refer to FIG. 5, FIG. 6, and FIG. 14. A first protrusion structure 13124 and a second protrusion structure 13125 are formed on two sides of a part that is of the contact portion of the positive metal insertion member 1312 and that is in the insulation base 1311. The first protrusion structure 13124 and the second protrusion structure 13125 are wing plates on two sides of the contact portion, and a width of the contact portion at the wing plate is greater than a width of the contact portion at another position. Correspondingly, two grooves are provided opposite to each other on the inner wall of the insulation base 1311. When the positive metal insertion member 1312 extends into the insulation base 1311, the first protrusion structure 13124 and the second protrusion structure 13125 are separately inserted into one of the grooves, to limit rotation of the positive metal insertion member 1312 relative to the insulation base.

In some embodiments, the first protrusion structure 13124 and the second protrusion structure 13125 are of a flat sheet structure, the first protrusion structure 13124 and the second protrusion structure 13125 are parallel to the circuit board 120, and the two grooves provided opposite to each other on the inner wall of the insulation base 1311 are parallel to the circuit board 120.

In some embodiments, the contact portion of the positive metal insertion member 1312 may alternatively include only one protrusion structure. Correspondingly, only one groove may alternatively be provided on the inner wall of the insulation base 1311. When the positive metal insertion member 1312 extends into the insulation base 1311, the protrusion structure is inserted into the groove. This can also avoid rotation of the positive metal insertion member 1312.

It should be understood that the first protrusion structure 13124 and the second protrusion structure 13125 that are formed on the contact portion are essentially the same as the first protrusion portion 13121 and the second protrusion portion 13122 that are formed on the circumferential surface of the fastening portion.

In this embodiment of this application, the photovoltaic connector 130 may further include the negative connector 132. For a structure of the negative connector 132, refer to related descriptions of the positive connector 131. Details are not described herein again. The following describes only differences.

Refer to FIG. 4 and FIG. 7. The upper plate bracket 140 may further include a negative support column 142, the negative connector 132 includes the negative metal insertion member 1321, and the negative support column 142 is configured to support the negative metal insertion member 1321. Specifically, a first part of a contact portion of the negative metal insertion member 1321 laps the negative support column 142, and is fastened to the negative support column 142.

In some embodiments, a height difference between the positive support column 141 and the negative support column 142 is greater than or equal to a third preset value. Usually, a height of the negative support column 142 is less than the height of the positive support column 141. In this way, a creepage distance between the positive metal insertion member 1312 of the positive connector 131 and the negative metal insertion member 1321 of the negative connector 132 is large. This improves electrical stability of the photovoltaic inverter under a high voltage.

In this embodiment of this application, because electrical stability of the photovoltaic inverter needs to be ensured, the height of the negative support column 142 is less than the height of the circuit board 120, and the negative metal insertion member 1321 is not directly electrically connected to the circuit board 120, but is electrically connected to the circuit board 120 through an additional metal connection member (not shown in the figure). That is, the photovoltaic connector 130 may further include the metal connection member. One end of the metal connection member is connected to the first part of the contact portion of the negative metal insertion member 1321, and the other end is connected to the circuit board 120, so that the negative metal insertion member 1321 may be electrically connected to the circuit board 120 through the metal connection member.

In some embodiments, the one end that is of the metal connection member and that is connected to the negative metal insertion member 1321, and the first part of the contact portion of the negative metal insertion member 1321 are fastened to a side that is of the negative support column 142 and that is close to the circuit board 120. In this way, stability of a connection between the metal connection member and the negative metal insertion member 1321 is good. This helps improve electrical stability of the photovoltaic inverter.

In this embodiment of this application, the one end that is of the metal connection member and that is connected to the negative metal insertion member 1321 may also be of a flat sheet structure, which is similar to a connection structure of the positive metal insertion member 1312 and the circuit board 120. If the negative metal insertion member 1321 rotates, the first part of the contact portion of the negative metal insertion member 1321 cannot be attached to the metal connection member. This may also cause poor contact and affect electrical stability of the photovoltaic inverter. Therefore, a structure of the negative metal insertion member 1321 and a structure of the positive metal insertion member 1312 are similar, and both include a protrusion portion or a protrusion structure, to limit rotation of the metal insertion member, reduce difficulty of assembling the photovoltaic inverter, and prevent the metal insertion member from being damaged due to torsion.

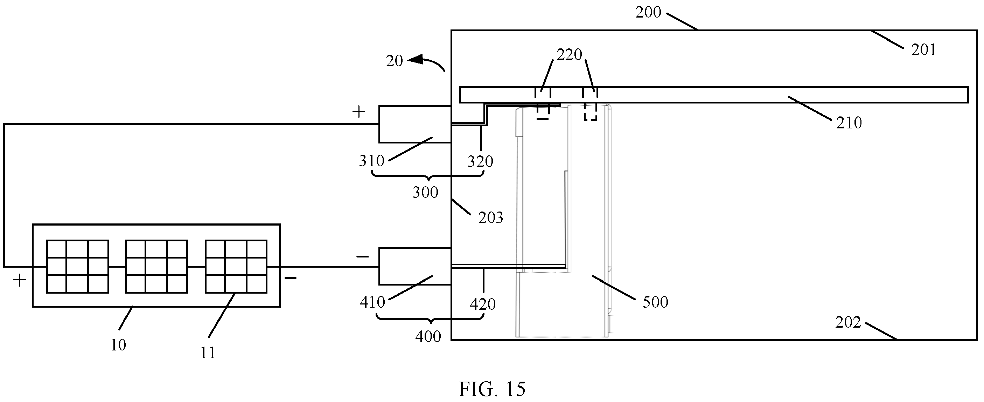

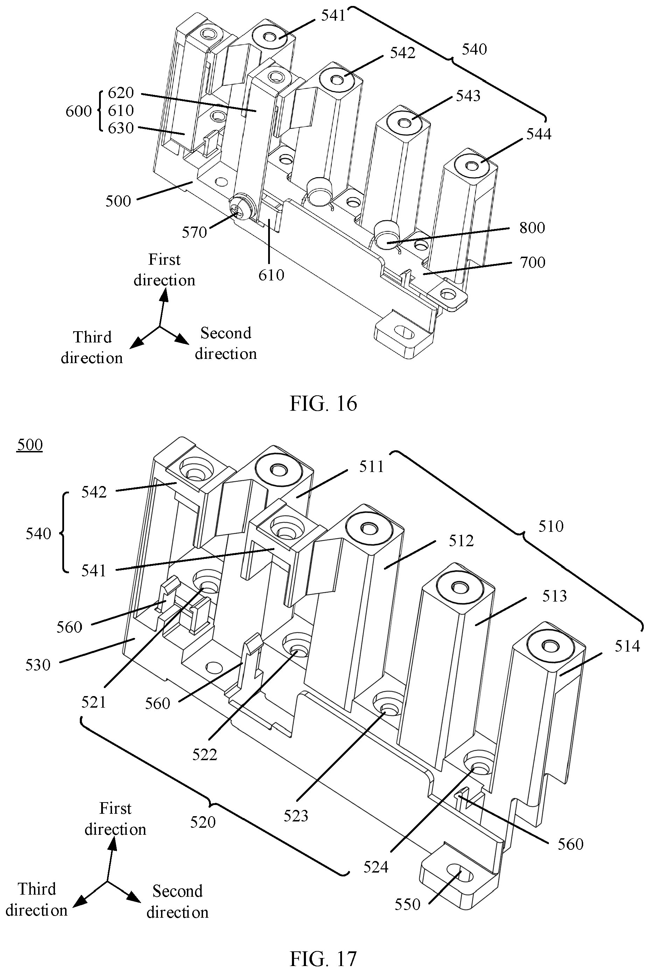

FIG. 15 is a diagram of a connection between the photovoltaic module 10 and the photovoltaic inverter 20 in FIG. 1. FIG. 16 is a three-dimensional diagram of structures of some components of the photovoltaic inverter 20 according to an embodiment of this application.

With reference to FIG. 15 and FIG. 16, it can be learned that the photovoltaic inverter 20 may include a casing 200, a main circuit board 210, a positive connector 300, a negative connector 400, an upper plate bracket 500, and a busbar conductor 600. The main circuit board 210 and the upper plate bracket 500 are located inside the casing 200, the positive connector 300 and the negative connector 400 are electrically connected to the main circuit board 210 through the upper plate bracket 500, and the upper plate bracket 500 may be fastened to the main circuit board 210 through a screw 220. A photovoltaic connector (including the positive connector 300 and the negative connector 400) may be electrically connected to the main circuit board 210 through the upper plate bracket 500 without a cable, so that a mounting procedure can be simplified, and connection reliability can be improved.

The main circuit board 210 may be an entire board, or may include a plurality of circuit subboards. The plurality of circuit subboards are spliced into the main circuit board 210. A function of each circuit subboard may be set according to a requirement. The positive connector 300 and the negative connector 400 may be connected to one of the circuit subboards.

An inverter circuit may be disposed on the main circuit board 210, and the inverter circuit may be configured to perform inversion processing on a direct current of the photovoltaic module 10 and output the direct current as an alternating current. In addition, a rectifier circuit may be further disposed on the main circuit board 210, and the rectifier circuit may be configured to rectify an alternating current into a direct current.

As shown in FIG. 15, the casing 200 includes a bottom housing and a cover plate 201. The bottom housing and the cover plate 201 enclose an accommodation cavity. The bottom housing includes a bottom plate 202 disposed opposite to the cover plate 201. A heat sink is mounted on a side of the bottom plate 202 that is away from the cover plate 201. Both the main circuit board 210 and the upper plate bracket 500 are located in the accommodation cavity, the upper plate bracket 500 is located between the main circuit board 210 and the bottom plate 202, and the upper plate bracket 500 may be fastened to the bottom plate 202.

In some embodiments, the bottom housing further includes a first side plate 203 located between the bottom plate 202 and the cover plate 201. The first side plate 203 is perpendicular to the bottom plate 202 and the cover plate 201, and both the positive connector 300 and the negative connector 400 are fastened to the first side plate 203. A distance between the positive connector 300 and the bottom plate 202 is greater than a distance between the negative connector 400 and the bottom plate 202 in a first direction. The positive connector 300 and the negative connector 400 are alternately arranged in sequence in a second direction. The first direction is perpendicular to a plane on which the main circuit board 210 is located, the second direction is parallel to a plane on which the first side plate 203 is located, and the second direction is perpendicular to the first direction.

In this application, a plurality of positive connectors 300 and a plurality of negative connectors 400 are alternately arranged in sequence in the second direction, and are distributed in a staggered manner in the first direction. This reduces mutual interference between electrical connections between the positive connectors 300 and the negative connectors 400, improves stability of the electrical connections, and makes an overall part more regular.

In some embodiments, the main circuit board 210 includes a circuit board front surface and a circuit board rear surface that are disposed back to each other in the first direction, the circuit board front surface faces the cover plate 201, and the circuit board rear surface faces the bottom plate 202. The main circuit board 210 divides the accommodation cavity into a first accommodating cavity and a second accommodating cavity, the first accommodating cavity is located between the main circuit board front surface and the cover plate 201, and the second accommodating cavity is located between the circuit board rear surface and the bottom plate 202. A volume of the first accommodating cavity is less than a volume of the second accommodating cavity, to respectively accommodate a first device and a second device. An operating heat generation amount of the second device is greater than an operating heat generation amount of the first device, or a length of the second device in the first direction is greater than a length of the first device in the first direction; and the first device includes a surface mount device resistor, a surface mount device capacitor, and an indicator that are fastened to the circuit board front surface, and the second device includes an inverter power assembly, a bus capacitor, and an inductor that are fastened to the circuit board rear surface.

It should be understood that, placing the main circuit board 210, the upper plate bracket 500, and an electronic device in the accommodation cavity can protect the main circuit board 210, the upper plate bracket 500, and the electronic device, and can also effectively utilize cavity space, to avoid an excessively large cavity, improve space utilization, and reduce costs. In addition, the second device may be thermally connected to a heat dissipation fin through the bottom plate 202. This helps shorten a heat transfer path and improve heat dissipation effect.

It may be understood that a height of an electronic device (namely, the second device) accommodated in the second accommodating cavity is greater than a height of an electronic device (namely, the first device) accommodated in the first accommodating cavity. For example, the height of the second device is less than or equal to 9 cm, and the height of the first device is less than or equal to 5 mm. To be specific, the first accommodating cavity can accommodate an electronic device with a large height, a large volume, and a high heat dissipation requirement, for example, an inverter power assembly, a bus capacitor, or an inductor; and the second accommodating cavity can accommodate an electronic device with a small height, a small volume, and a low heat dissipation requirement, for example, a surface mount device capacitor, a surface mount device resistor, or an indicator.

As shown in FIG. 15, the photovoltaic module 10 includes at least one photovoltaic panel 11, and the photovoltaic panel 11 is connected to the main circuit board 210. In some embodiments, the photovoltaic module 10 includes a plurality of photovoltaic panels 11 connected in series. In a series connection manner, direct currents of the plurality of photovoltaic panels 11 are converged, and then the photovoltaic panels 11 are connected to the inverter circuit in the main circuit board 210 through the positive connector 300 and the negative connector 400. The photovoltaic module 10 includes a positive end and a negative end. Inside the photovoltaic module 10, a current flows from the negative end of the photovoltaic module 10 to the positive end of the photovoltaic module 10, and both the positive end and the negative end of the photovoltaic module 10 are connected to the main circuit board 210.

In some embodiments, one end that is of the positive connector 300 and that is away from the main circuit board 210 and one end that is of the negative connector 400 and that is away from the main circuit board 210 are electrically connected to the photovoltaic module 10. Therefore, the positive connector 300 and the negative connector 400 may also be referred to as the photovoltaic connector. Specifically, one end of the positive connector 300 is connected between the upper plate bracket 500 and the main circuit board 210, and the other end of the positive connector 300 is connected to a positive electrode of the photovoltaic module 10. One end of the negative connector 400 is electrically connected to the main circuit board 210 through the busbar conductor, and the other end of the negative connector 400 is connected to a negative electrode of the photovoltaic module 10.

In some other embodiments, one end that is of the positive connector 300 and that is away from the main circuit board 210 and one end that is of the negative connector 400 and that is away from the main circuit board 210 are electrically connected to an energy storage system 30 (namely, an external energy storage apparatus). Therefore, the positive connector 300 and the negative connector 400 may also be referred to as an energy storage connector. Specifically, one end of the positive connector 300 is connected between the upper plate bracket 500 and the main circuit board 210, and the other end of the positive connector 300 is connected to a positive electrode of the external energy storage apparatus. One end of the negative connector 400 is electrically connected to the main circuit board 210 through the busbar conductor, and the other end of the negative connector 400 is connected to a negative electrode of the external energy storage apparatus.

The energy storage connector may obtain a direct current from the external energy storage apparatus, and output the direct current to the inverter circuit on the main circuit board 210, and the inverter circuit may invert the direct current into an alternating current for use. In addition, the energy storage connector may further transmit electric energy to the external energy storage apparatus, that is, output a direct current to the external energy storage apparatus. It should be understood that when the external energy storage apparatus (for example, a battery pack) is charged, a source of electric energy may be electric energy provided by the photovoltaic module 10, or may be mains electricity. An alternating current may be rectified into a direct current through the rectifier circuit on the main circuit board 210. The direct current may be transmitted to the external energy storage apparatus (for example, a battery pack) through the energy storage connector, to charge the external energy storage apparatus (for example, the battery pack).

In some other embodiments, a part of the plurality of positive connectors 300 and the plurality of negative connectors 400 may be connected to the photovoltaic module 10, and the other part of the plurality of positive connectors 300 and the plurality of negative connectors 400 may be connected to the energy storage system 30 (namely, the external energy storage apparatus). Specifically, one end of a part of the plurality of positive connectors 300 is connected between the upper plate bracket 500 and the main circuit board 210, the other end of the part of the plurality of positive connectors 300 is connected to a positive electrode of the photovoltaic module 10, one end of a part of the plurality of negative connectors 400 is electrically connected to the main circuit board 210 through the busbar conductor, and the other end of the part of the plurality of negative connectors 400 is connected to a negative electrode of the photovoltaic module 10. One end of the other part of the plurality of positive connectors 300 is connected between the upper plate bracket 500 and the main circuit board 210, the other end of the other part of the plurality of positive connectors 300 is connected to a positive electrode of the external energy storage apparatus, one end of the other part of the plurality of negative connectors 400 is electrically connected to the main circuit board 210 through the busbar conductor, and the other end of the other part of the plurality of negative connectors 400 is connected to a negative electrode of the external energy storage apparatus.

In some embodiments, as shown in FIG. 15, the positive connector 300 includes a first housing 310 and a first terminal 320. The first housing 310 is fastened to an outer side of the first side plate 203. The first terminal 320 is located in the first housing 310 and extends into the casing 200. The first terminal 320 and the main circuit board 210 may be crimped together through the screw 220. The negative connector 400 includes a second housing 410 and a second terminal 420. The second housing 410 is fastened to the outer side of the first side plate 203. The second terminal 420 is located in the second housing 410 and extends into the casing 200.

In some embodiments, as shown in FIG. 15, the positive connector 300 is connected between the positive end of the photovoltaic module 10 and the main circuit board 210. Specifically, a first end of the positive connector 300 is connected to the positive end of the photovoltaic module 10, and a second end of the positive connector 300 is connected to the main circuit board 210 through the first terminal 320 and the upper plate bracket 500. For example, the main circuit board 210 fastens the first terminal 320 between the main circuit board 210 and the upper plate bracket 500 through the screw 220.

Similarly, the negative connector 400 may be connected between the negative end of the photovoltaic module 10 and the main circuit board 210. Specifically, a first end of the negative connector 400 is connected to the negative end of the photovoltaic module 10, and a second end of the negative connector 400 is electrically connected to the main circuit board 210 through the second terminal 420, the upper plate bracket 500, and the busbar conductor 600.

Refer to FIG. 2. It can be learned that the busbar conductor 600 is configured to: uniformly combine currents input by a plurality of negative electrodes and then transmit a combined current to the main circuit board 210. As shown in FIG. 16, the busbar conductor 600 includes a busbar metal sheet 610 and an adapter metal sheet 620, the busbar metal sheet 610 is electrically connected to the plurality of negative connectors 400, and the busbar metal sheet 610 is configured to uniformly combine currents transmitted by the plurality of negative connectors 400. The adapter metal sheet 620 extends in the first direction, a first end of the adapter metal sheet 620 is fastened to the busbar metal sheet 610, a second end of the adapter metal sheet 620 is fastened to the main circuit board 210, and the adapter metal sheet 620 is configured to transmit, to the main circuit board 210, a negative current obtained through combination by the busbar metal sheet 610.

In some embodiments, the busbar metal sheet 610 may be fastened to the adapter metal sheet 620 through a fastener 570 (for example, a screw).

In this application, the positive connector 300 is connected between the upper plate bracket 500 and the main circuit board 210, the negative connector 400 is electrically connected to the main circuit board 210 through the busbar conductor 600, and the busbar conductor 600 may directly combine currents in a plurality of loops and then transfer a combined current to the main circuit board 210. The busbar conductor 600 may include the busbar metal sheet 610 and the adapter metal sheet 620. The busbar metal sheet 610 combines the currents transmitted by the plurality of negative connectors 400 and then transmits a combined current to the adapter metal sheet 620, and then the adapter metal sheet 620 transmits the combined current to the main circuit board 210, to transmit the currents from the negative connectors 400 to the main circuit board 210. In this way, a quantity of separate upper plate conductors can be reduced, a loop length can be shortened, a contact thermal resistance and heat generation can be reduced, adapter efficiency can be improved, and costs of an entire system can be reduced.

It should be noted that positive and negative polarities of the photovoltaic connector are merely examples for description. The positive connector 300 may alternatively be connected to the positive end of the photovoltaic module 10, and the negative connector 400 may alternatively be connected to the negative end of the photovoltaic module 10. This is not limited in this application.

It should be understood that the foregoing described fastening manner of the busbar conductor is not limited to the foregoing solution. In a possible implementation, the busbar conductor may alternatively be disposed on the main circuit board, or disposed at a position close to a switch, to reduce a width of the entire inverter.

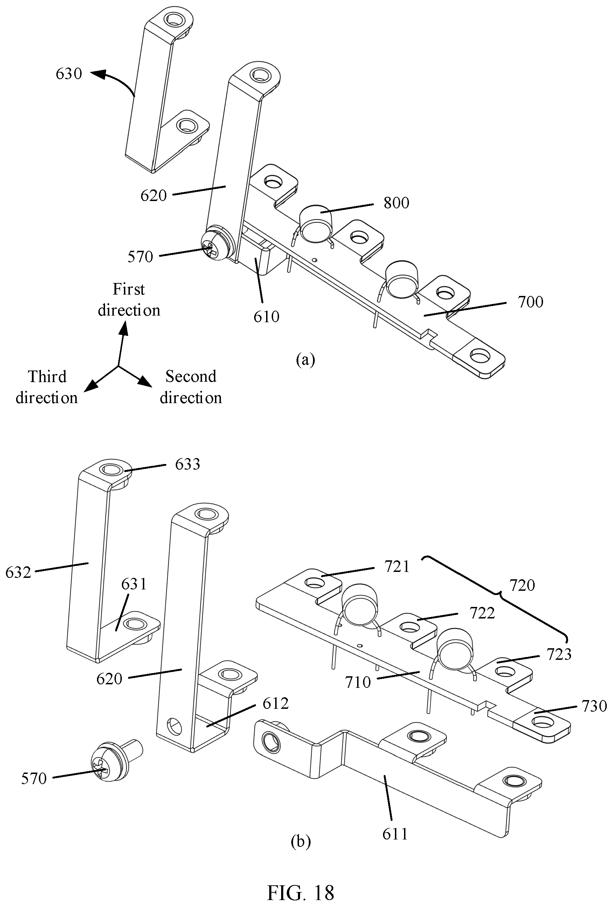

With reference to FIG. 17 and FIG. 18, the following describes in detail specific structures of the upper plate bracket 500, the busbar conductor 600, and the integrated circuit board 700 provided in this embodiment of this application. FIG. 4 is a three-dimensional diagram of the structure of the upper plate bracket 500 according to an embodiment of this application. FIG. 5 is a three-dimensional diagram of structures of the busbar conductor 600 and the integrated circuit board 700 according to this application.

Refer to FIG. 15 and FIG. 17. The upper plate bracket 500 includes a first-type support column 510, a second-type support column 520, and a base 530. The first-type support column 510 and the second-type support column 520 are alternately arranged in sequence in the second direction, the second direction is perpendicular to the first direction, and the base 530 is fastened to the bottom plate 202. A first end of the first-type support column 510 is fastened to the base 530, a second end of the first-type support column 510 is connected to the main circuit board 210, and the second end of the first-type support column 510 is an end away from the base 530. The one end of the positive connector 300 is connected between the second end of the first-type support column 510 and the main circuit board 210. A first end of the second-type support column 520 is fastened to the base 530, a second end of the second-type support column 520 is connected to the one end of the negative connector 400, the second end of the second-type support column 520 is an end away from the base 530, a height of the second-type support column 520 in the first direction is less than a height of the first-type support column 510 in the first direction, and a height difference between the second-type support column 520 and the first-type support column 510 in the first direction is greater than a first threshold.

In some embodiments, the one end of the positive connector 300 may be connected between the second end of the first-type support column 510 and the main circuit board 210, the other end of the positive connector 300 may be connected to the positive end of the photovoltaic module 10. The one end of the negative connector 400 may be connected to the second end of the second-type support column 520, and the other end of the negative connector 400 may be connected to the negative end of the photovoltaic module 10. There may be a plurality of positive connectors 300, a plurality of negative connectors 400, a plurality of first-type support columns 510, and a plurality of second-type support columns 520, one positive connector 300 is connected to one first-type support column 510, and one negative connector 400 is connected to one second-type support column 520.

It should be understood that the height of the second-type support column 520 in the first direction is less than the height of the first-type support column 510 in the first direction, the height difference between the second-type support column 520 and the first-type support column 510 in the first direction is greater than the first threshold, and the first direction is perpendicular to the plane on which the main circuit board 210 is located, so that an insulation distance between the first-type support column 510 and the second-type support column 520 meets a specific requirement, and problems such as discharging and a short circuit are avoided.

In this embodiment of this application, the positive connector 300 is connected between the first-type support column 510 and the main circuit board 210, that is, may be electrically connected to the main circuit board 210 directly through the first-type support column 510. The negative connector 400 is electrically connected to the main circuit board 210 through the second-type support column 520 and the busbar conductor 600, and the busbar conductor 600 may directly combine currents in a plurality of loops and then transfer a combined current to the main circuit board. In this way, a quantity of separate upper plate conductors can be reduced, a loop length can be shortened, a contact thermal resistance and heat generation can be reduced, adapter efficiency can be improved, and costs of the entire system can be reduced.

In addition, the first-type support column 510 and the second-type support column 520 are designed a manner of staggering upper space and lower space. For example, the positive connector 300 at a positive electrode is connected to the first-type support column 510, and the negative connector 400 at a negative electrode is connected to the second-type support column 520. The spatial staggered design can reduce an overall volume of the upper plate bracket 500, and lay a foundation for miniaturization of the entire system.

In some embodiments, the first-type support column 510 includes a plurality of first support portions, and the second-type support column 520 includes a plurality of second support portions. The plurality of first support portions and the plurality of second support portions are alternately arranged in sequence in the second direction. In the first direction, a distance between a surface that is of the first support portion and that is away from the bottom plate 202 and the bottom plate 202 is greater than a distance between a surface that is of the second support portion and that is away from the bottom plate 202 and the bottom plate 202. Ends of a part of connectors (namely, the plurality of positive connectors 300) of a plurality of photovoltaic connectors are respectively fastened to surfaces that are of the plurality of first support portions and that are away from the bottom plate 202, and ends of the other part of connectors (namely, the plurality of negative connectors 400) of the plurality of photovoltaic connectors are respectively fastened to surfaces that are of the plurality of second support portions and that are away from the bottom plate 202.

For example, as shown in FIG. 16 and FIG. 17, the first-type support column 510 includes a first-type support column 511, a second-type support column 512, a third type of support column 513, and a fourth type of support column 514, and a nut 540 is mounted on second ends of the first-type support column 511, the second-type support column 512, the third support column 513, and the fourth support column 514. Specifically, a nut 541 is mounted on the second end of the first-type support column 511, a nut 542 is mounted on the second end of the second-type support column 512, a nut 543 is mounted on the second end of the third support column 513, and a nut 544 is mounted on the second end of the fourth support column 514. A plurality of screws 220 pass through the main circuit board 210 and the first terminal 320, and crimp the first terminal 320 to the circuit board 210. It should be noted that a quantity of support columns included in the first-type support column 510 is not limited in this embodiment of this application.

Similarly, the second-type support column 520 includes a fifth support column 521, a sixth support column 522, a seventh support column 523, and an eighth support column 524, through holes are provided on second ends of the fifth support column 521, the sixth support column 522, the seventh support column 523, and the eighth support column 524, and a fastener, for example, a screw, can pass through the second terminal 420 and the second-type support column to fasten the negative connector 400 to the second-type support column 520. It should be noted that a quantity of support columns included in the second-type support column 520 is not limited in this embodiment of this application.

As shown in FIG. 17, the upper plate bracket 500 may further include a lapping member 540. The lapping member 540 is fastened to the first-type support column 510 or the base 530, a second end of the lapping member 540 is connected to the main circuit board 210, and the second end of the lapping member 540 is an end away from the base 530. A height difference between the second end of the lapping member 540 and the second end of the second-type support column 520 in the first direction is less than a second threshold. One end of the busbar conductor 600 is connected between the main circuit board 210 and the second end of the lapping member 540.

It should be understood that a height difference between the second end of the lapping member 540 and the second end of the first-type support column 510 in the first direction is less than the second threshold, so that the lapping member 540 can support the busbar conductor 600.

In some embodiments, in the first direction, the lapping member 540 is located between the integrated circuit board 700 and the main circuit board 210. A projection of the lapping member 540 in the first direction partially overlaps a projection of the integrated circuit board 700 in the first direction. In a third direction, a distance between the lapping member 540 and the first side plate 203 is greater than a distance between the first-type support column 510 and the first side plate 203.

In an example, a first end of the lapping member 540 is fastened to the base 530, the second end of the lapping member 540 is connected to the main circuit board 210, and one end of the busbar conductor 600 may be connected between the main circuit board 210 and the second end of the lapping member 540, that is, the busbar conductor 600 is clamped between the lapping member 540 and the main circuit board 210.

In another example, the lapping member 540 is suspended, a side surface of the lapping member 540 is fastened to a side surface of the first-type support column 511, the second end of the lapping member 540 is connected to the main circuit board 210, and one end of the busbar conductor 600 may be connected between the main circuit board 210 and the second end of the lapping member 540.

In some embodiments, as shown in FIG. 18, the lapping member 540 includes a first lapping member 541 and a second lapping member 542, a side surface of the first lapping member 541 may be fastened to a side surface of the first-type support column 510, and the second lapping member 542 may be fastened to the first-type support column 510 and the base 530.

For example, a side surface that is of the first-type support column 511 and that is close to the second-type support column 512 may extend in the third direction to form a first side surface extension portion, and a side surface that is of the second-type support column 512 and that is close to the first-type support column 511 may extend in the third direction to form a second side surface extension portion. The first lapping member 541 may be connected between the first side surface extension portion and the second side surface extension portion. A side surface that is of the second-type support column 512 and that is away from the first-type support column 511 may extend in the third direction to form a third side surface extension portion. A first side surface of the second lapping member 542 is connected to the third side surface extension portion, a second side surface of the second lapping member 542 extends toward the base 530 in the first direction and is fastened to the base 530, and the first side surface of the second lapping member 542 and the second side surface of the second lapping member 542 are two opposite side surfaces.

It should be understood that, the main circuit board 210 has a through hole, a through hole is also provided at one end that is of the busbar conductor 600 (or the adapter metal sheet 620, or the metal connection sheet 630) and that is connected to the main circuit board 210, a projection of the through hole on the main circuit board 210 overlaps a projection of the through hole on the busbar conductor 600 in the first direction, and a screw may pass through the through hole on the main circuit board 210 and the through hole on the busbar conductor 600, and be screwed on the second end of the lapping member 540. That is, the screw may pass through the through hole on the main circuit board 210 and the through hole on the busbar conductor 600, and is fastened to the lapping member 540.

As shown in FIG. 16 and FIG. 18, the busbar conductor 600 may be a multi-loop combining upper plate busbar conductor, the busbar conductor 600 may include the busbar metal sheet 610 and the adapter metal sheet 620, the busbar metal sheet 610 may include a plurality of busbar ends and an adapter end, the plurality of busbar ends are separately connected to the second end of the second-type support column 520 and electrically connected to the plurality of negative connectors 400, and the adapter end is fastened to the adapter metal sheet 620. A first end of the adapter metal sheet 620 is fastened to the busbar metal sheet 610, a second end of the adapter metal sheet 620 is fastened to the main circuit board 210, and the adapter metal sheet 620 is configured to transmit, to the main circuit board 210, a negative current obtained through combination by the busbar metal sheet 610.

In this embodiment of this application, the busbar metal sheet 610 may include the plurality of busbar ends and the adapter end, and the plurality of busbar ends may be respectively electrically connected to the plurality of negative connectors 400. That is, the plurality of busbar ends may be respectively connected to second end surfaces of a plurality of second-type support columns 520, and the plurality of negative connectors 400 are respectively connected to the second end surfaces of the plurality of second-type support columns 520. Therefore, the plurality of busbar ends may be respectively electrically connected to the plurality of negative connectors 400. After the plurality of busbar ends of the busbar metal sheet 610 are respectively electrically connected to the plurality of negative connectors 400, currents are combined. After the currents are combined into one current, the current is transferred to the adapter metal sheet 620 through the adapter end. The adapter metal sheet 620 transmits the combined current to the main circuit board 210. In this way, a quantity of separate upper plate conductors can be reduced, a loop length can be shortened, a contact thermal resistance and heat generation can be reduced, and adapter efficiency can be improved.

It should be understood that, the positive connector 300 is directly electrically connected to the upper plate bracket 500, and the negative connector 400 is electrically connected to the upper plate bracket 500 through the busbar conductor 600. Through disposing of the upper plate bracket 500, the plurality of positive connectors 300 and the plurality of negative connectors 400 are fastened together, so that stability of connections between the plurality of positive connectors 300 and the main circuit board 210 and between the plurality of negative connectors 400 and the main circuit board 210 is improved; and lines are appropriately planned and arranged by using the upper plate bracket 500, so that it is more conducive to mounting and line connections of the photovoltaic inverter. Through disposing of the busbar conductor 600, the negative connector 400 is disposed further from the main circuit board 210 than the positive connector 300 in the first direction. The negative connector 400 and the positive connector 300 are distributed in a staggered manner. This helps save mounting space on the main circuit board 210, and the plurality of negative connectors 400 and the plurality of positive connectors 300 are distributed as densely as possible.

There may be a plurality of included busbar conductor 600, and the busbar conductor 600 is configured to transfer, to the main circuit board 210, a current transmitted by the negative connector 400. One of the plurality of busbar conductors may be connected to second ends of at least two support columns in the second-type support column 520, that is, a plurality of currents are transmitted to the main circuit board 210 after the busbar conductor is designed for combination. One of the plurality of busbar conductors may alternatively be separately connected to a second end of one second-type support column 520, that is, the busbar conductor is not designed for combination and one current is separately transmitted to the main circuit board 210.

For example, the busbar metal sheet 610 may include a first busbar metal sheet 611 and a second busbar metal sheet 612. The first busbar metal sheet 611 may be designed for combination, that is, the first busbar metal sheet 611 may be connected between second ends of a plurality of support columns (for example, the seventh support column 523 and the eighth support column 524) and the adapter metal sheet 620, and the first busbar metal sheet 611 may transmit a plurality of negative currents to the connection metal sheet 620. The second busbar metal sheet 612 is connected between a second end of a support column (for example, the sixth support column 522) and the adapter metal sheet 620, and the second busbar metal sheet 612 may transmit a negative current to the adapter metal sheet 620.

As shown in FIG. 16 and FIG. 18, the photovoltaic inverter 20 may further include the integrated circuit board 700 and an electrical component 800. The integrated circuit board 700 is fastened to the base 530 and is connected to the plurality of negative connectors 400. In the first direction, the integrated circuit board 700 is located between the busbar metal sheet 610 and the main circuit board 210. In the third direction, the integrated circuit board 700 is located on a side that is of the first-type support column 510 and that is away from the first side plate 203, and the third direction is perpendicular to the first direction and the second direction. The electrical component 800 is configured to implement at least one of direct current filtering, surge protection, temperature detection, and current detection functions, and the electrical component 800 is fastened to a surface that is of the integrated circuit board 700 and that faces the main circuit board 210.

It should be understood that functions such as direct current filtering, surge protection, temperature detection, and current detection may be integrated into the integrated circuit board based on a size, integration, and the like of the integrated circuit board 700. Usually, at least one of direct current filtering, surge protection, temperature detection, and current detection functions may be integrated into the integrated circuit board 700, so that a size of the main circuit board 210 can be reduced. This reduces a size of the entire system and reduces costs.

It should be understood that functional modules such as a direct current filtering functional module and a surge protection functional module are strongly coupled to positive and negative power flows of a direct current, and can be independently formed as independent modules. Apparatuses such as a direct current filtering apparatus and a surge protection apparatus are integrated into the integrated circuit board 700, and the integrated circuit board 700 may be directly connected to the negative connector 400. An NTC detection apparatus is integrated into the integrated circuit board 700, and the NTC detection apparatus is in contact with the busbar conductor 600 and performs temperature detection. A current detection apparatus (such as a Hall current detection apparatus) is integrated into the integrated circuit board 700, is in contact with the busbar conductor 600, and can perform current detection.

In an example, a direct current filtering function may be integrated in the integrated circuit board 700. It should be understood that, after a negative-end current is input to the photovoltaic inverter, filtering processing may be first performed through the integrated circuit board 700, and then a processed current is transmitted to the main circuit board 210 through the busbar conductor 600, so that the current transmitted to the main circuit board 210 is pure, and a current loss in a transmission process can be reduced.

In an example, a temperature detection function may be integrated in the integrated circuit board 700, and the electrical component 800 may be a temperature sensor. An interface for insertion between a male end and a female end of the photovoltaic connector is prone to fault due to a high temperature. Therefore, a temperature on the interface needs to be detected. A temperature detection function may be integrated into the integrated circuit board 700, so that the integrated circuit board 700 is close to the negative connector 400, and a temperature loss is small. Therefore, the detected temperature is more accurate and sensitivity is higher.

In some embodiments, as shown in (b) in FIG. 18, the integrated circuit board 700 includes a circuit board body 710 and a connection sheet 720. One end of the connection sheet 720 is electrically connected to the circuit board body 710, and the other end of the connection sheet 720 is connected to the second end of the second-type support column 520 and is electrically connected to the negative connector 400. The connection sheet 720 is made of a conductive metal material.

For example, the connection sheet 720 includes a first connection sheet 721, a second connection sheet 722, and a third connection sheet 723, one end of the first connection sheet 721 is connected to the second end of the sixth support column 522, one end of the second connection sheet 722 is connected to the second end of the seventh support column 523, one end of the third connection sheet 723 is connected to the second end of the eighth support column 524, and the other end of the first connection sheet 721, the other end of the second connection sheet 722, and the other end of the third connection sheet 723 are electrically connected to the circuit board body 710. It should be understood that the second terminal 420 of the negative connector 400 is separately connected to the second end of the sixth support column 522, the second end of the seventh support column 523, and the second end of the eighth support column 524, a current can be transmitted to the integrated circuit board 700 through the connection sheet 720, and direct current filtering, surge protection, temperature detection, current detection, and the like are performed by the integrated circuit board 700.

In some embodiments, the integrated circuit board 700 further includes a fastening plate 730, the fastening plate 730 has a through hole, and the integrated circuit board 700 can be fastened to the casing 200 (namely, the bottom plate 202) through the through hole on the fastening plate 730.

It should be noted that, the integrated circuit board 700 may be electrically connected to the negative connector 400 through the connection sheet 720, so that a current can be transmitted to the integrated circuit board 700. In addition, the connection sheet 720 may further be in contact with the busbar conductor 600, and the busbar conductor 600 may be in contact with the main circuit board 210, to form a loop between the integrated circuit board 700 and the main circuit board 210. The current may be transferred to the integrated circuit board 700 in the formed loop. In this way, direct current filtering, temperature detection, current detection, and the like can be performed on the integrated circuit board 700.

In some embodiments, with reference to FIG. 16 and FIG. 17, it can be learned that the upper plate bracket 500 further includes a snap-fit 560. The snap-fit 560 is fastened to a surface that is of the base 530 and that faces the main circuit board 210. The snap-fit 560 is clamped on two sides of the integrated circuit board 700 in the second direction, to clamp the integrated circuit board 700 and the busbar metal sheet 610 together.

In this implementation, the busbar conductor 600 and the integrated circuit board 700 are fastened in a target region in a fastening manner of the snap-fit 560, to avoid movement of the busbar conductor 600 and the integrated circuit board 700.

In some embodiments, with reference to FIG. 16 and FIG. 18, it can be learned that the photovoltaic inverter 20 further includes a metal connection sheet 630, one end of the metal connection sheet 630 is connected to the second end of the second-type support column 520, the other end of the metal connection sheet 630 is connected to the main circuit board 210, and the metal connection sheet 630 is configured to transmit, to the main circuit board 210, a current input by one negative connector 400. The metal connection sheet 630 includes an extension portion 631, a connection portion 632, and an upper-side fastening portion 633. The connection portion 632 is connected between the extension portion 631 and the upper-side fastening portion 633, the extension portion 631 is parallel to the upper-side fastening portion 633, and the extension portion 631 extends in the third direction. The upper plate bracket 500 further includes the snap-fit 560. The snap-fit 560 is fastened to the surface that is of the base 530 and that faces the main circuit board 210. The snap-fit 560 is clamped on two sides of the extension portion 631 in the second direction, to clamp the metal connection sheet 630 on the base 530.

The metal connection sheet 630 may be understood as a single-loop upper plate busbar conductor, or may be considered as a part of the busbar conductor 600. The metal connection sheet 630 may be connected between the second end of the first-type support column 511 and a second end of the second lapping member 542.

In this embodiment, the metal connection sheet 630 is fastened in a target region of the base 530 in a fastening manner of the snap-fit 560, to avoid movement of the metal connection sheet 630.

In some embodiments, the first-type support column 510, the second-type support column 520, the base 530, and the lapping member 540 may all be made of an insulation material, to prevent electric conduction.

In some embodiments, the first-type support column 510, the second-type support column 520, the base 530, and the lapping member 540 are of an integrated structure. In some embodiments, the first-type support column 510, the second-type support column 520, and the base 530 are of an integrated structure.

In some embodiments, as shown in FIG. 17, a fastening mounting hole 550 is provided on the base 530, and the upper plate bracket 500 is fastened to the casing 200 (the bottom plate 202) through the fastening mounting hole 550. For example, a screw may pass through the fastening mounting hole 550, to fasten the upper plate bracket 500 to the bottom plate 202 of the casing 200 of the photovoltaic inverter 20. In this way, consistent stability of a fastening position of the upper plate bracket 500 is improved, and the upper plate bracket 500 does not need to be disposed on the main circuit board 210. This reduces strength and stress requirements of the main circuit board 210.

In some embodiments, the upper plate bracket 500 may use a hollow housing, to implement a lightweight design of the upper plate bracket 500 and reduce a weight of the upper plate bracket 500. For example, the first-type support column 510, the second-type support column 520, and the lapping member 540 may all be hollowed out, that is, the first-type support column 510, the second-type support column 520, and the lapping member 540 are all of a hollow structure, and manufacturing costs and weights are minimized when connection stability of the first-type support column 510, the second-type support column 520, and the lapping member 540 is ensured.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A photovoltaic inverter, comprising a casing, a main circuit board, a photovoltaic connector, an upper plate bracket, and a busbar conductor, wherein the photovoltaic connector comprises a positive connector and a negative connector;
the casing comprises a bottom housing and a cover plate, the bottom housing and the cover plate enclose an accommodation cavity, the bottom housing comprises a bottom plate disposed opposite to the cover plate, and a heat sink is mounted on a side that is of the bottom plate and that is away from the cover plate;
the main circuit board is located in the accommodation cavity, and the upper plate bracket is located between the bottom plate and the main circuit board and is fastened to the bottom plate;
one end of the positive connector is connected between the upper plate bracket and the main circuit board and is electrically connected to the main circuit board, one end of the negative connector is electrically connected to the main circuit board through the busbar conductor, and the busbar conductor is configured to: uniformly combine currents input by a plurality of negative electrodes and then transmit a combined current to the main circuit board;
the photovoltaic connector comprises an insulation base and a metal insertion member, one end of the insulation base is located inside the casing, the other end of the insulation base is located outside the casing, and the photovoltaic connector is fastened to the casing through the insulation base; and
the insulation base is of a hollow tubular structure, the metal insertion member is wrapped in the insulation base, the metal insertion member is a conductive metal conductor, the metal insertion member comprises an interface portion, a fastening portion, and a contact portion, the interface portion is configured to connect to a photovoltaic module, the contact portion is of a sheet structure, the contact portion is configured to connect to the main circuit board or the busbar conductor in a stacking manner, and the fastening portion is configured to fasten the insulation base.

2. The photovoltaic inverter according to claim 1, wherein the contact portion comprises a first part, a second part, and a third part, the first part is attached to the main circuit board, the third part is connected to the fastening portion, the second part is located between the first part and the third part, and the second part is perpendicular to the main circuit board.

3. The photovoltaic inverter according to claim 1, wherein a part that is of the contact portion and that is in the insulation base comprises at least one protrusion structure, at least one groove is further formed on an inner wall of the insulation base, and the at least one protrusion structure is inserted into the at least one groove.

4. The photovoltaic inverter according to any one of claims 1 to 3, wherein the busbar conductor comprises a busbar metal sheet and an adapter metal sheet, the busbar metal sheet is electrically connected to a plurality of negative connectors, and the busbar metal sheet is configured to uniformly combine currents transmitted by the plurality of negative connectors; and
the adapter metal sheet extends in a first direction, a first end of the adapter metal sheet is fastened to the busbar metal sheet, a second end of the adapter metal sheet is fastened to the main circuit board, the adapter metal sheet is configured to transmit, to the main circuit board, a negative current obtained through combination by the busbar metal sheet, and the first direction is perpendicular to a plane on which the main circuit board is located.

5. The photovoltaic inverter according to claim 4, wherein the upper plate bracket comprises a first-type support column, a second-type support column, and a base, the first-type support column and the second-type support column are alternately arranged in sequence in a second direction, the second direction is perpendicular to the first direction, and the base is fastened to the bottom plate;
a first end of the first-type support column is fastened to the base, a second end of the first-type support column is connected to the main circuit board, and the second end of the first-type support column is an end away from the base; and
the one end of the positive connector is connected between the second end of the first-type support column and the main circuit board.

6. The photovoltaic inverter according to claim 5, wherein a first end of the second-type support column is fastened to the base, a second end of the second-type support column is connected to the one end of the negative connector, the second end of the second-type support column is an end away from the base, a height of the second-type support column in the first direction is less than a height of the first-type support column in the first direction, and a height difference between the second-type support column and the first-type support column in the first direction is greater than a first threshold; and
the busbar metal sheet comprises a plurality of busbar ends and an adapter end, the plurality of busbar ends are separately connected to the second end of the second-type support column, and the adapter end is fastened to the adapter metal sheet.

7. The photovoltaic inverter according to claim 4, wherein the upper plate bracket further comprises a lapping member, the lapping member is fastened to a first-type support column or the base, a second end of the lapping member is connected to the main circuit board, the second end of the lapping member is an end away from the base, and a height difference between the second end of the lapping member and a second end of the first-type support column in the first direction is less than a second threshold; and
the second end of the adapter metal sheet is connected between the main circuit board and the second end of the lapping member.

8. The photovoltaic inverter according to claim 6, wherein the bottom housing further comprises a first side plate located between the bottom plate and the cover plate, the first side plate is perpendicular to the bottom plate and the cover plate, both the positive connector and the negative connector are fastened to the first side plate, a distance between the positive connector and the bottom plate is greater than a distance between the negative connector and the bottom plate in the first direction, a plurality of positive connectors and the plurality of negative connectors are alternately arranged in sequence in the second direction, and the second direction is parallel to a plane on which the first side plate is located.

9. The photovoltaic inverter according to claim 8, wherein
the positive connector comprises a first housing and a first terminal, the first housing is fastened to an outer side of the first side plate, and the first terminal is located in the first housing, extends into the casing, and is connected to the second end of the first-type support column; and
the negative connector comprises a second housing and a second terminal, the second housing is fastened to the outer side of the first side plate, and the second terminal is located in the second housing, extends into the casing, and is connected to the second end of the second-type support column.

10. The photovoltaic inverter according to claim 1, wherein the main circuit board comprises a circuit board front surface and a circuit board rear surface that are disposed back to each other in a first direction, the circuit board front surface faces the cover plate, the circuit board rear surface faces the bottom plate, the main circuit board divides the accommodation cavity into a first accommodating cavity and a second accommodating cavity, the first accommodating cavity is located between the main circuit board front surface and the cover plate, the second accommodating cavity is located between the circuit board rear surface and the bottom plate, and a volume of the first accommodating cavity is less than a volume of the second accommodating cavity, to respectively accommodate a first device and a second device; and
an operating heat generation amount of the second device is greater than an operating heat generation amount of the first device, or a length of the second device in the first direction is greater than a length of the first device in the first direction; and the first device comprises a surface mount device resistor, a surface mount device capacitor, and an indicator that are fastened to the circuit board front surface, and the second device comprises an inverter power assembly, a bus capacitor, and an inductor that are fastened to the circuit board rear surface.

11. The photovoltaic inverter according to claim 1, wherein
the photovoltaic inverter comprises a knob switch and a DC/DC circuit, the knob switch is electrically connected between the photovoltaic connector and the DC/DC circuit, and the knob switch comprises a plurality of breaking units; and
each of at least two positive connectors is connected to the DC/DC circuit through one of the plurality of breaking units, and at least two negative connectors are connected to the DC/DC circuit through one of the plurality of breaking units after current combination.

12. The photovoltaic inverter according to claim 1 or 11, wherein the busbar conductor is fastened to the main circuit board.

13. The photovoltaic inverter according to claim 8, wherein the photovoltaic inverter further comprises an integrated circuit board and an electrical component, the integrated circuit board is fastened to the base and connected to the plurality of negative connectors, the integrated circuit board is located between the busbar metal sheet and the main circuit board in the first direction, the integrated circuit board is located, in a third direction, on a side that is of the first-type support column and that is away from the first side plate, and the third direction is perpendicular to the first direction and the second direction; and
the electrical component is configured to implement at least one of direct current filtering, surge protection, temperature detection, and current detection functions, and the electrical component is fastened to a surface that is of the integrated circuit board and that faces the main circuit board.

14. The photovoltaic inverter according to claim 13, wherein the upper plate bracket further comprises a snap-fit, the snap-fit is fastened to a surface that is of the base and that faces the main circuit board, and the snap-fit is clamped on two sides of the integrated circuit board in the second direction, to clamp the integrated circuit board and the busbar metal sheet together.

15. The photovoltaic inverter according to claim 7, wherein the first-type support column, a second-type support column, the base, and the lapping member are of an integrated structure.
